(19) Europäisches Patentamt
European Patent Office
Office européen des brevets

(11) **EP 4 395 438 A1**

(12) **EUROPEAN PATENT APPLICATION**
published in accordance with Art. 153(4) EPC

(43) Date of publication:
**03.07.2024 Bulletin 2024/27**

(21) Application number: **22866316.7**

(22) Date of filing: **11.08.2022**

(51) International Patent Classification (IPC):
***H04W 72/04*** (2023.01)      ***H04W 72/12*** (2023.01)

(52) Cooperative Patent Classification (CPC):
**H04W 72/04; H04W 72/0446; H04W 72/12;
H04W 72/1263**

(86) International application number:
**PCT/CN2022/111620**

(87) International publication number:
**WO 2023/035842 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021 CN 202111063351**

(71) Applicant: **Huawei Technologies Co., Ltd.
Shenzhen, Guangdong 518129 (CN)**

(72) Inventors:
• **LI, Jun**
  **Shenzhen, Guangdong 518129 (CN)**
• **JIAO, Shurong**
  **Shenzhen, Guangdong 518129 (CN)**
• **HUA, Meng**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS, DEVICE, AND STORAGE MEDIUM**

(57)    A communication method, apparatus, and device, and a storage medium are disclosed. The method includes: A terminal device determines that a time domain unit in which a first resource is located includes a first time domain unit, where a quantity of symbols for uplink transmission in the first time domain unit is greater than or equal to n. The terminal device sends first uplink information in the first time domain unit in a second time domain unit after the first time domain unit, the terminal device sends first uplink information in the first time domain unit at a first time-frequency location corresponding to the first time domain unit, or the terminal device skips sending first uplink information in the first time domain unit, where the first uplink information is one piece of uplink information in repeatedly sent uplink information, and a quantity of symbols for uplink transmission in the second time domain unit is less than n. This method avoids a case in which because a frequency domain resource in the first time domain unit is divided by the first uplink information, the frequency domain resource cannot be allocated to another terminal device for use, and resource scheduling flexibility of a network device and a transmission speed and a throughput of the terminal device are affected.

FIG. 6

**Description**

This application claims priority to Chinese Patent Application No. 202111063351.3, filed with the China National Intellectual Property Ad1ministration on September 10, 2021 and entitled "COMMUNICATION METHOD, APPARATUS, AND DEVICE, AND STORAGE MEDIUM", which is incorporated herein by reference in its entirety.

**TECHNICAL FIELD**

This application relates to the field of communication technologies, and in particular, to a communication method, apparatus, and device, and a storage medium.

**BACKGROUND**

Currently, in some communication systems, such as a 5th generation mobile communication system (5th generation wireless system, 5G), to reduce occupation of frequency domain resources and reduce a transmission latency of uplink information, a new duplex mode, namely, a complementary TDD (complementary TDD, C-TDD) mode, also referred to as a full duplex (full duplex) mode, is proposed.

In the C-TDD mode, two time domain units (for example, a narrowband slot and a wideband slot) are included. When a terminal device continuously sends the uplink information (for example, repeatedly sent uplink information), the wideband slot is usually occupied, and the wideband slot is divided into two parts that are inconsecutive in frequency domain. As a result, the wideband slot cannot be allocated to another terminal device for use, and resource scheduling flexibility of a network device and a transmission speed and a throughput of the terminal device are affected.

**SUMMARY**

Embodiments of this application provide a communication method, apparatus, and device, and a storage medium, to avoid a case in which because a wideband slot is divided into two parts that are inconsecutive in frequency domain, the wideband slot cannot be allocated to another terminal device for use, and resource scheduling flexibility of a network device and a transmission speed and a throughput of a terminal device are affected.

According to a first aspect, this application provides a communication method, including: A terminal device determines that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, $n \geq 1$, and n is an integer; and the terminal device performs one of the following operations:

The terminal device sends the first uplink information in the first time domain unit in a second time domain unit after the first time domain unit, where a quantity of symbols for uplink transmission in the second time domain unit is less than n;

the terminal device sends the first uplink information in the first time domain unit at a first time-frequency location corresponding to the first time domain unit, where the first time-frequency location is different from a second time-frequency location, and the second time-frequency location is a time-frequency location of the first resource in the first time domain unit in which the first resource is located; and
the terminal device skips sending the first uplink information in the first time domain unit.

According to the communication method provided in the first aspect, when the terminal device sends the repeatedly sent first uplink information in the first time domain unit, the terminal device discards the first uplink information in the first time domain unit, or changes a resource location of the first uplink information. This avoids a case in which because a frequency domain resource in the first time domain unit is divided by the first uplink information, the frequency domain resource cannot be allocated to another terminal device for use, and resource scheduling flexibility of a network device and a transmission speed and a throughput of the terminal device are affected.

With reference to the first aspect, in some implementations of the first aspect, the first uplink information is uplink information other than a first piece of uplink information in the repeated uplink information.

According to the communication method provided in this implementation, in a case in which because a non-first piece of uplink information is sent in the first time domain unit, the frequency domain resource in the first time domain unit is divided, a transmission resource of the first uplink information is changed or the first uplink information is discarded. The terminal device still transmits the first piece of uplink information on a transmission resource indicated by the network device, which is applicable to a scenario in which the network device needs to indicate a specific location of the first piece of uplink information.

With reference to the first aspect, in some implementations of the first aspect, the method further includes: The terminal device sends second uplink information on a second resource, where the second uplink information is the first piece of uplink information in the repeatedly sent uplink information, and a time domain unit in which the second resource is located includes the first time domain unit.

According to the communication method provided in this implementation, the terminal device transmits the first piece of uplink information on the transmission resource indicated by the network device, regardless of whether a resource occupied by the first piece of uplink information includes the first time domain unit. This enhances a scheduling capability of the network device.

With reference to the first aspect, in some implementations of the first aspect, the method further includes one of the following: The terminal device sends first frequency hopping information and/or second frequency hopping information in third uplink information in a second time domain unit after a first time domain unit in which the second resource is located; the terminal device sends first frequency hopping information and/or second frequency hopping information in third uplink information in a first time domain unit after a first time domain unit in which the second resource is located; or the terminal device skips sending third uplink information, where the third uplink information is uplink information other than the first piece of uplink information in the repeated uplink information.

According to the communication method provided in this implementation, because a resource occupied by the second uplink information includes the first time domain unit, a frequency domain resource occupied by the second uplink information may be a downlink transmission resource in the second time domain unit. In other words, one or more pieces of frequency hopping information cannot be normally transmitted. In this case, the terminal device sends at least one piece of frequency hopping information in the third uplink information in the second time domain unit after the first time domain unit, or sends at least one piece of frequency hopping information in the third uplink information in a next first time domain unit, or abandons sending the third uplink information. This ensures normal transmission of the third uplink information and improves transmission reliability.

With reference to the first aspect, in some implementations of the first aspect, that the terminal device sends first frequency hopping information and/or second frequency hopping information in third uplink information in a second time domain unit after a first time domain unit includes: The terminal device separately determines whether a frequency domain location of the first frequency hopping information in the third uplink information and/or a frequency domain location of the second frequency hopping information in the third uplink information are/is located on an uplink transmission frequency domain resource in the second time domain unit; and the terminal device sends, in the second time domain unit, frequency hopping information on the uplink transmission frequency domain resource in the second time domain unit.

According to the communication method provided in this implementation, the terminal device sends, in the second time domain unit after the first time domain unit, at least one piece of frequency hopping information, in the third uplink information, whose frequency domain location is located on the uplink transmission frequency domain resource in the second time domain unit. In other words, at least one piece of frequency hopping information, in the third uplink information, whose frequency domain location is not located on the uplink transmission frequency domain resource in the second time domain unit is discarded. This improves transmission reliability.

With reference to the first aspect, in some implementations of the first aspect, the method further includes: The terminal device receives a first parameter from a network device, where the first parameter indicates the first time-frequency location.

According to the communication method provided in this implementation, the terminal device determines the first time-frequency location based on a configuration of the network device, and sends the first uplink information in the first time domain unit at the first time-frequency location corresponding to the first time domain unit. This avoids division of the first time domain unit, reduces a delay in sending the first uplink information, and avoids an information loss caused by abandoning sending the first uplink information.

With reference to the first aspect, in some implementations of the first aspect, the first parameter includes frequency domain offset information or frequency domain resource information.

According to the communication method provided in this implementation, when the first parameter directly indicates the frequency domain resource information, the terminal device can learn of a frequency domain location of the first time-frequency location, thereby improving processing efficiency of the terminal device. When the first parameter indicates the offset information, the first parameter occupies a small quantity of resources, thereby reducing signaling overheads.

With reference to the first aspect, in some implementations of the first aspect, that the terminal device sends the uplink information in the first time domain unit in a second time domain unit after the first time domain unit includes: The terminal device sends the uplink information in the first time domain unit at the second time-frequency location corresponding to the second time domain unit after the first time domain unit.

According to the communication method provided in this implementation, when the terminal device delays sending of the first uplink information in the first time domain unit to the second time domain unit after the first time domain unit, the terminal device uses the second time-frequency location that is the same as that in the first time domain unit, and does not need to redetermine a resource transmission location. This improves processing efficiency.

With reference to the first aspect, in some implementations of the first aspect, the first resource includes a first frequency hopping resource and/or a second frequency hopping resource, the first frequency hopping resource is a preset resource for sending first frequency hopping information in the first uplink information, and the second frequency hopping resource is a preset resource for sending second frequency hopping information in the first uplink information.

According to the communication method provided in this implementation, a solution is provided for a scenario in which repeatedly sent uplink information is frequency hopping information. Similarly, the terminal device discards frequency hopping information in the first time domain unit, or changes a resource location of frequency hopping information. This avoids a case in which because a frequency domain resource in the first time domain unit is divided by the first uplink information, the frequency domain resource cannot be allocated to another terminal device for use, and resource scheduling flexibility of a network device and a transmission speed and a throughput of the terminal device are affected.

With reference to the first aspect, in some implementations of the first aspect, all frequency domain resources on the symbols for uplink transmission are for uplink transmission.

With reference to the first aspect, in some implementations of the first aspect, the second time domain unit further includes at least one first symbol, and some frequency domain resources on the at least one first symbol are for uplink transmission.

According to a second aspect, this application provides a communication method, including: A network device determines that a time domain unit in which a first resource is located includes a first time domain unit, where a quantity of symbols for uplink transmission in the first time domain unit is greater than or equal to n, the first resource is a preset resource for receiving first uplink information, the first uplink information is one piece of uplink information in repeatedly sent uplink information, n≥1, and n is an integer; and the network device performs one of the following operations:

The network device receives the first uplink information in the first time domain unit in a second time domain unit after the first time domain unit, where a quantity of symbols for uplink transmission in the second time domain unit is less than n;

the network device receives the first uplink information in the first time domain unit at a first time-frequency location corresponding to the first time domain unit, where the first time-frequency location is different from a second time-frequency location, and the second time-frequency location is a time-frequency location of the first resource in the first time domain unit in which the first resource is located; and
the network device skips receiving the first uplink information in the first time domain unit.

With reference to the second aspect, in some implementations of the second aspect, the first uplink information is uplink information other than a first piece of uplink information in the repeated uplink information.

With reference to the second aspect, in some implementations of the second aspect, the method further includes: The network device receives second uplink information on a second resource, where the second uplink information is the first piece of uplink information in the repeatedly sent uplink information, and a time domain unit in which the second resource is located includes the first time domain unit.

With reference to the second aspect, in some implementations of the second aspect, the method further includes one of the following: The network device receives first frequency hopping information and/or second frequency hopping information in third uplink information in a second time domain unit after a first time domain unit in which the second resource is located; the network device receives first frequency hopping information and/or second frequency hopping information in third uplink information in a first time domain unit after a first time domain unit in which the second resource is located; or the network device skips receiving third uplink information, where the third uplink information is uplink information other than the first piece of uplink information in the repeated uplink information.

With reference to the second aspect, in some implementations of the second aspect, that the network device receives first frequency hopping information and/or second frequency hopping information in third uplink information in a second time domain unit after a first time domain unit includes: The network device separately determines whether a frequency domain location of the first frequency hopping information in the third uplink information and/or a frequency domain location of the second frequency hopping information in the third uplink information are/is located on an uplink transmission frequency domain resource in the second time domain unit; and the network device receives, in the second time domain unit, frequency hopping information on the uplink transmission frequency domain resource in the second time domain unit.

With reference to the second aspect, in some implementations of the second aspect, the method further includes: The network device sends a first parameter to a terminal device, where the first parameter indicates the first time-frequency location.

With reference to the second aspect, in some implementations of the second aspect, the first parameter includes frequency domain offset information or frequency domain resource information.

With reference to the second aspect, in some implementations of the second aspect, that the network device receives the uplink information in the first time domain unit in a second time domain unit after the first time domain unit includes: The network device receives the uplink information in the first time domain unit at the second time-frequency location corresponding to the second time domain unit after the first time domain unit.

With reference to the second aspect, in some implementations of the second aspect, the first resource includes a first frequency hopping resource and/or a second frequency hopping resource, the first frequency hopping resource is a preset resource for receiving first frequency hopping information in the first uplink information, and the second frequency hopping resource is a preset resource for receiving second frequency hopping information in the first uplink information.

With reference to the second aspect, in some implementations of the second aspect, all frequency domain resources on the symbols for uplink transmission are for uplink transmission.

With reference to the second aspect, in some implementations of the second aspect, the second time domain unit further includes at least one first symbol, and some frequency domain resources on the at least one first symbol are for uplink transmission.

For beneficial effect of the communication method provided in the second aspect and the possible implementations of the second aspect, refer to the beneficial effect brought by the first aspect and the possible implementations of the first aspect. Details are not described herein again.

According to a third aspect, embodiments of this application provide a communication apparatus, including: a processing unit, configured to determine that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, $n \geq 1$, and n is an integer; and the processing unit is further configured to perform one of the following operations:

The processing unit controls a transceiver unit to send the first uplink information in the first time domain unit in a second time domain unit after the first time domain unit, where a quantity of symbols for uplink transmission in the second time domain unit is less than n;

the processing unit controls a transceiver unit to send the first uplink information in the first time domain unit at a first time-frequency location corresponding to the first time domain unit, where the first time-frequency location is different from a second time-frequency location, and the second time-frequency location is a time-frequency location of the first resource in the first time domain unit in which the first resource is located; and
the processing unit skips sending the first uplink information in the first time domain unit.

With reference to the third aspect, in some implementations of the third aspect, the first uplink information is uplink information other than a first piece of uplink information in the repeated uplink information.

With reference to the third aspect, in some implementations of the third aspect, the transceiver unit is further configured to: send second uplink information on a second resource, where the second uplink information is the first piece of uplink information in the repeatedly sent uplink information, and a time domain unit in which the second resource is located includes the first time domain unit.

With reference to the third aspect, in some implementations of the third aspect, the processing unit controls the transceiver unit to send first frequency hopping information and/or second frequency hopping information in third uplink information in a second time domain unit after a first time domain unit in which the second resource is located; the processing unit controls the transceiver unit to send first frequency hopping information and/or second frequency hopping information in third uplink information in a first time domain unit after a first time domain unit in which the second resource is located; or the processing unit skips sending third uplink information, where the third uplink information is uplink information other than the first piece of uplink information in the repeated uplink information.

With reference to the third aspect, in some implementations of the third aspect, the processing unit is specifically configured to: separately determine whether a frequency domain location of the first frequency hopping information in the third uplink information and/or a frequency domain location of the second frequency hopping information in the third uplink information are/is located on an uplink transmission frequency domain resource in the second time domain unit; and control the transceiver unit to send in the second time domain unit, frequency hopping information on the uplink transmission frequency domain resource in the second time domain unit.

With reference to the third aspect, in some implementations of the third aspect, the transceiver unit is further configured to: receive a first parameter from a network device, where the first parameter indicates the first time-frequency location.

With reference to the third aspect, in some implementations of the third aspect, the first parameter includes frequency domain offset information or frequency domain resource information.

With reference to the third aspect, in some implementations of the third aspect, the processing unit is specifically configured to: control the transceiver unit to send the uplink information in the first time domain unit at the second time-frequency location corresponding to the second time domain unit after the first time domain unit.

With reference to the third aspect, in some implementations of the third aspect, the first resource includes a first frequency hopping resource and/or a second frequency hopping resource, the first frequency hopping resource is a preset resource for sending first frequency hopping information in the first uplink information, and the second frequency hopping resource is a preset resource for sending second frequency hopping information in the first uplink information.

With reference to the third aspect, in some implementations of the third aspect, all frequency domain resources on the symbols for uplink transmission are for uplink transmission.

With reference to the third aspect, in some implementations of the third aspect, the second time domain unit further includes at least one first symbol, and some frequency domain resources on the at least one first symbol are for uplink transmission.

For beneficial effect of the communication apparatus provided in the third aspect and the possible implementations of the third aspect, refer to the beneficial effect brought by the first aspect and the possible implementations of the first aspect. Details are not described herein again.

According to a fourth aspect, embodiments of this application provide a communication apparatus, including: a processing unit, configured to determine that a time domain unit in which a first resource is located includes a first time domain unit, where a quantity of symbols for uplink transmission in the first time domain unit is greater than or equal to n, the first resource is a preset resource for receiving first uplink information, the first uplink information is one piece of uplink information in repeatedly sent uplink information, n≥1, and n is an integer; and the processing unit is further configured to perform one of the following operations:

The processing unit controls a transceiver unit to receive the first uplink information in the first time domain unit in a second time domain unit after the first time domain unit, where a quantity of symbols for uplink transmission in the second time domain unit is less than n;

the processing unit controls a transceiver unit to receive the first uplink information in the first time domain unit at a first time-frequency location corresponding to the first time domain unit, where the first time-frequency location is different from a second time-frequency location, and the second time-frequency location is a time-frequency location of the first resource in the first time domain unit in which the first resource is located; and

the processing unit skips receiving the first uplink information in the first time domain unit.

With reference to the fourth aspect, in some implementations of the fourth aspect, the first uplink information is uplink information other than a first piece of uplink information in the repeated uplink information.

With reference to the fourth aspect, in some implementations of the fourth aspect, the transceiver unit is further configured to: receive second uplink information on a second resource, where the second uplink information is the first piece of uplink information in the repeatedly sent uplink information, and a time domain unit in which the second resource is located includes the first time domain unit.

With reference to the fourth aspect, in some implementations of the fourth aspect, the processing unit is further configured to perform one of the following operations: The processing unit controls the transceiver unit to receive first frequency hopping information and/or second frequency hopping information in third uplink information in a second time domain unit after a first time domain unit in which the second resource is located; the processing unit controls the transceiver unit to receive first frequency hopping information and/or second frequency hopping information in third uplink information in a first time domain unit after a first time domain unit in which the second resource is located; and the processing unit skips receiving third uplink information, where the third uplink information is uplink information other than the first piece of uplink information in the repeated uplink information.

With reference to the fourth aspect, in some implementations of the fourth aspect, the processing unit is specifically configured to: separately determine whether a frequency domain location of the first frequency hopping information in the third uplink information and/or a frequency domain location of the second frequency hopping information in the third uplink information are/is located on an uplink transmission frequency domain resource in the second time domain unit; and control the transceiver unit to receive in the second time domain unit, frequency hopping information on the uplink transmission frequency domain resource in the second time domain unit.

With reference to the fourth aspect, in some implementations of the fourth aspect, the transceiver unit is further configured to: send a first parameter to a terminal device, where the first parameter indicates the first time-frequency location.

With reference to the fourth aspect, in some implementations of the fourth aspect, the first parameter includes frequency domain offset information or frequency domain resource information.

With reference to the fourth aspect, in some implementations of the fourth aspect, the processing unit is specifically configured to: control the transceiver unit to receive the uplink information in the first time domain unit at the second time-frequency location corresponding to the second time domain unit after the first time domain unit.

With reference to the fourth aspect, in some implementations of the fourth aspect, the first resource includes a first frequency hopping resource and/or a second frequency hopping resource, the first frequency hopping resource is a preset resource for receiving first frequency hopping information in the first uplink information, and the second frequency hopping resource is a preset resource for receiving second frequency hopping information in the first uplink information.

With reference to the fourth aspect, in some implementations of the fourth aspect, all frequency domain resources on the symbols for uplink transmission are for uplink transmission.

With reference to the fourth aspect, in some implementations of the fourth aspect, the second time domain unit further includes at least one first symbol, and some frequency domain resources on the at least one first symbol are for uplink transmission.

For beneficial effect of the communication method provided in the fourth aspect and the possible implementations of the fourth aspect, refer to the beneficial effect brought by the first aspect and the possible implementations of the first aspect. Details are not described herein again.

According to a fifth aspect, an embodiment of this application provides a communication device, including a processor and a memory. The memory is configured to store a computer program, and the processor is configured to invoke the computer program stored in the memory and run the computer program, to perform the method in any one of the first aspect, the second aspect, or the possible implementations.

According to a sixth aspect, an embodiment of this application provides a chip, including a processor, configured to invoke computer instructions from a memory and run the computer instructions, so that a device in which the chip is installed performs the method in any one of the first aspect, the second aspect, or the possible implementations.

According to a seventh aspect, an embodiment of this application provides a computer-readable storage medium, configured to store computer program instructions, and the computer program enables a computer to perform the method in any one of the first aspect, the second aspect, or the possible implementations.

According to an eighth aspect, an embodiment of this application provides a computer program product, including computer program instructions. The computer program instructions enable a computer to perform the method in any one of the first aspect, the second aspect, or the possible implementations.

According to a ninth aspect, an embodiment of this application provides a terminal, including the communication apparatus according to any one of the first aspect or the possible implementations of the first aspect.

## BRIEF DESCRIPTION OF DRAWINGS

FIG. 1 is a schematic diagram of an architecture of a mobile communication system to which an embodiment of this application is applied;

FIG. 2a is a schematic diagram of a frequency division duplex transmission mode according to this application;

FIG. 2b is a schematic diagram of a time division duplex transmission mode according to this application;

FIG. 2c is a schematic diagram of a full duplex transmission mode according to this application;

FIG. 3a is a schematic diagram of resource assignment according to this application;

FIG. 3b is a schematic diagram of another resource assignment according to this application;

FIG. 3c is a schematic diagram of still another resource assignment according to this application;

FIG. 4a to FIG. 4c each are a schematic diagram of a preset transmission resource of uplink information according to an embodiment of this application;

FIG. 5a to FIG. 5c each are a schematic diagram of another preset transmission resource of uplink information according to an embodiment of this application;

FIG. 6 is an interaction flowchart of a communication method 10 according to an embodiment of this application;

FIG. 7 is an interaction flowchart of a communication method 20 according to an embodiment of this application;

FIG. 8 is an interaction flowchart of a communication method 30 according to an embodiment of this application;

FIG. 9a to FIG. 9c each are a schematic diagram of a transmission resource of uplink information according to an embodiment of this application;

FIG. 10a to FIG. 10d each are a schematic diagram of another transmission resource of uplink information according to an embodiment of this application;

FIG. 11a to FIG. 11c each are a schematic diagram of still another transmission resource of uplink information according to an embodiment of this application;

FIG. 12a to FIG. 12c each are a schematic diagram of a yet another transmission resource of uplink information according to an embodiment of this application;

FIG. 13 is a schematic diagram of still yet another transmission resource of uplink information according to an embodiment of this application;

FIG. 14a to FIG. 14c each are a schematic diagram of a further transmission resource of uplink information according to an embodiment of this application;

FIG. 15 is a schematic diagram of a still further transmission resource of uplink information according to an embodiment of this application;

FIG. 16 is a schematic diagram of a time-frequency resource of a sounding reference signal according to an embodiment of this application;

FIG. 17 is a schematic block diagram of a communication apparatus according to an embodiment of this application;

FIG. 18 is another schematic block diagram of a communication apparatus according to an embodiment of this application; and

FIG. 19 is a schematic diagram of a structure of a terminal device according to an embodiment of this application.

## DESCRIPTION OF EMBODIMENTS

The following describes technical solutions of this application with reference to accompanying drawings.

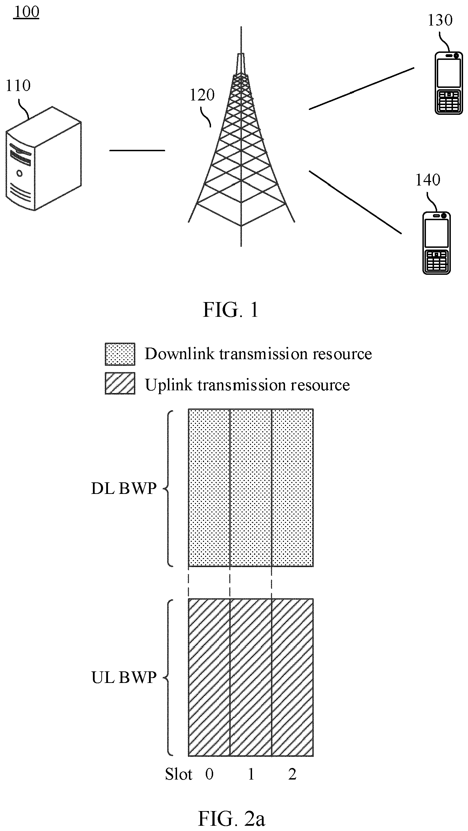

FIG. 1 is a schematic diagram of an architecture of a mobile communication system to which an embodiment of this application is applied. As shown in FIG. 1, the mobile communication system includes a core network device 110, a network device 120, and at least one terminal device (a terminal device 130 and a terminal device 140 shown in FIG. 1). The terminal device is connected to the network device in a wireless manner, and the network device is connected to the core network device in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, network devices, and terminal devices included in the mobile communication system are not limited in embodiments of this application.

The network device is an access device for the terminal device to connect to the mobile communication system in a wireless manner, and may be a base station NodeB, an evolved base station (eNodeB), a base station in an NR mobile communication system, a base station in a future mobile communication system, an access node in a Wi-Fi system, or the like. A specific technology and a specific device form used by the network device are not limited in embodiments of this application.

The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless receiving and sending function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The network device and the terminal device may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in embodiments of this application.

The network device and the terminal device may communicate with each other on a licensed spectrum (licensed spectrum), may communicate with each other on an unlicensed spectrum (unlicensed spectrum), or may communicate with each other on both a licensed spectrum and an unlicensed spectrum. The network device and the terminal device may communicate with each other on a spectrum below 6G, may communicate with each other on a spectrum above 6G, or may communicate with each other on both a spectrum below 6G and a spectrum above 6G. A spectrum resource used between the network device and the terminal device is not limited in embodiments of this application.

It should be understood that specific forms of the network device and the terminal device are not limited in this application.

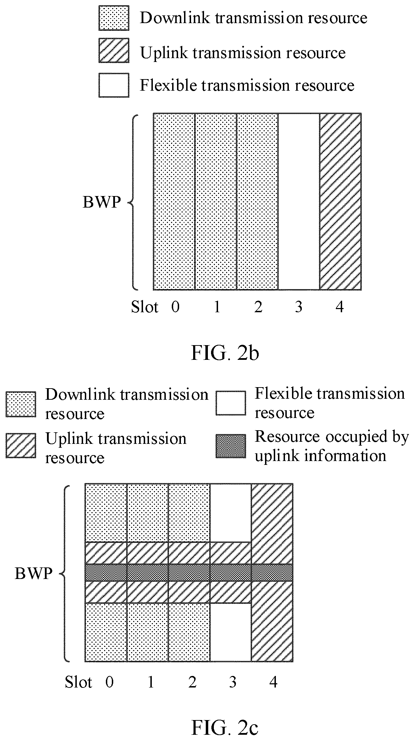

Bidirectional information transmission is usually performed between the terminal device and the network device by using frequency division duplex (frequency division duplex, FDD) or time division duplex (time division duplex, TDD). For example, in an FDD transmission mode, the terminal device may perform both uplink transmission and downlink transmission in a same time domain unit based on a downlink (down link, DL) bandwidth part (bandwidth part, BWP) and an uplink (up link, UL) BWP configured by the network device. Refer to FIG. 2a. In each slot (for example, a slot 0) of a time domain resource allocated to the terminal device, the terminal device may receive, on the DL BWP, downlink information sent by the network device, and send uplink information to the network device on the UL BWP. In a TDD transmission mode, the terminal device and the network device reuse a same BWP, and therefore the terminal device cannot perform both uplink transmission and downlink transmission on a same time domain resource. Refer to FIG. 2b. The terminal device receives, in a slot 0, 1, or 2, downlink information sent by the network device, the terminal device sends uplink information to the network device in a slot 4, and the terminal device may receive downlink information or send uplink information based on a configuration of the network device in a slot 3 (flexible slot). In the FDD transmission mode, occupied frequency domain resources are large, and in the TDD transmission mode, a transmission latency of the uplink information is long.

To reduce occupation of the frequency domain resources and reduce the transmission latency of the uplink information, a new duplex mode, namely, complementary TDD (complementary TDD, C-TDD) mode, or referred to as full duplex (full duplex) mode, is proposed. In the C-TDD mode, two time domain units (for example, a narrowband slot and a wideband slot) are included. The narrowband slot includes a frequency domain resource for uplink transmission and a frequency domain resource for downlink transmission. In other words, the frequency domain resource for uplink transmission in the narrowband slot occupies some frequency domain resources in a BWP. The wideband slot includes only a frequency domain resource for uplink transmission. In other words, the frequency domain resource for uplink transmission in the wideband slot is all frequency domain resources in a BWP. Narrowband and wideband are distinguished based on a frequency domain resource for uplink transmission in a BWP. Specifically, in one symbol or a plurality of symbols or slots, narrowband means that some frequency domain resources in a BWP are for uplink transmission, and wideband means that all frequency domain resources in a BWP are for uplink transmission. The terminal device performs uplink transmission on the uplink transmission resource in the BWP in the narrowband slot and performs downlink transmission on the downlink transmission resource in the BWP in the narrowband slot based on the BWP configured by the network device. Refer to FIG. 2c. In a slot 0, 1, or 2, the terminal device sends uplink information on an uplink transmission resource in a preconfigured BWP, and receives downlink information on a downlink transmission resource in the preconfigured BWP. In addition, the terminal device performs uplink transmission on a BWP in the wideband slot based on the BWP configured by the network device. For example, the terminal device sends uplink information in a slot 4 shown in FIG. 2c. It should be noted that, in the C-TDD mode, a flexible narrowband slot may be included. In the flexible narrowband slot, for example, a slot 3 in FIG. 2c, a BWP includes an uplink transmission resource and a flexible transmission resource. The flexible transmission resource may be used as an uplink transmission resource or a downlink transmission resource based on a configuration of the network device. When the flexible transmission resource is used as the uplink transmission resource, the flexible narrowband slot may be equivalent to a wideband slot; or when the flexible transmission resource is used as the downlink transmission resource, the flexible narrowband slot may be equivalent to a narrowband slot. It can be learned that, in the C-TDD mode, compared with that in the TDD mode, the terminal device obtains, through assignment, more uplink transmission resources, so that the uplink information such as an uplink channel (for example, a physical uplink shared channel (physical uplink shared channel, PUSCH) or a physical uplink control channel (physical uplink control channel, PUCCH)) or a signal can be transmitted on the uplink transmission resources in slots 0 to 4 shown in FIG. 2c.

It should be noted that a time domain unit may be a slot (slot), a subframe (subframe), a symbol (symbol), or another time unit defined in the future, or a time domain unit may be a plurality of symbols, a plurality of subframes, or a plurality of slots. It should be noted that the time domain unit is a measurement unit of time domain, and is not necessarily a minimum time unit.

In addition, the foregoing C-TDD and full duplex are examples of names provided for ease of description, and do not constitute a limitation on embodiments of this application.

The following uses an example to describe assignment of frequency domain resources to a PUCCH and a PUSCH in an NR communication system.

Generally, the frequency domain resources allocated to the PUCCH in the NR communication system are consecutive.

Assignment of the frequency domain resources to the PUSCH in the NR communication system includes an uplink resource assignment type 0 and an uplink resource assignment type 1. For example, for resource assignment modes in two different waveforms of discrete Fourier transform spread orthogonal frequency division multiplexing (Discrete Fourier Transform Spread Orthogonal Frequency Division Multiplexing, DFT-S-OFDM) and cyclic prefixed orthogonal frequency division multiplexing (Cyclic Prefixed Orthogonal Frequency Division Multiplexing, CP-OFDM), refer to the following Table 1.

**Table 1**

|  | DFT-S-OFDM | CP-OFDM |
|---|---|---|
| Uplink resource assignment mode | Support the uplink resource assignment type 1 | Support the resource assignment types 0 and 1 |

1. Uplink resource assignment type 0

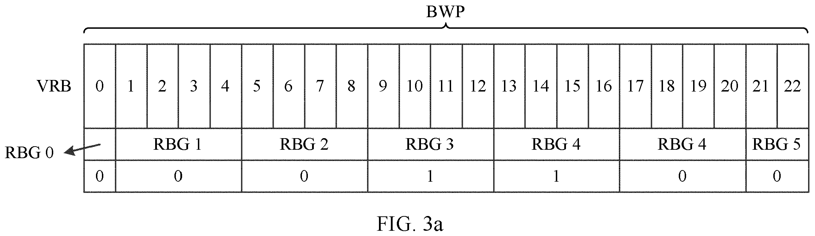

A resource block group (resource block group, RBG) allocated to a terminal device is indicated by a bitmap (bitmap). As shown in FIG. 3a, RBGs corresponding to a bit 1 in the bitmap are allocated to the terminal device. In other words, resource blocks (resource blocks, RBs) 9 to 16 are allocated to the terminal device.

In a frequency range 2 (Frequency Range 2, FR 2), the uplink resource assignment type 0 supports only consecutive resource assignment.

In a frequency range 1 (Frequency Range 1, FR 1), only consecutive resource assignment is supported in an intra-band carrier aggregation (intra-band carrier aggregation, intra-band CA) scenario. In an inter-band carrier aggregation (inter-band carrier aggregation, inter-band CA) scenario and a non-carrier aggregation scenario, both consecutive resource assignment and non-consecutive resource assignment are supported. However, non-consecutive resource assignment needs to meet the following conditions.

$$\text{Condition 1: } N_{RB\_gap}/(N_{RB\_gap} + N_{RB\_alloc}) \leq 0.25$$

Condition 2: If a frequency is 15 kHz, $N_{RB\_gap}$ + $N_{RB\_alloc}$ needs to be greater than 106; if a frequency is 30 kHz, $N_{RB\_gap}$ + $N_{RB\_alloc}$ needs to be greater than 51; or if a frequency is 60 kHz, $N_{RB\_gap}$ + $N_{RB\_alloc}$ needs to be greater than 24.

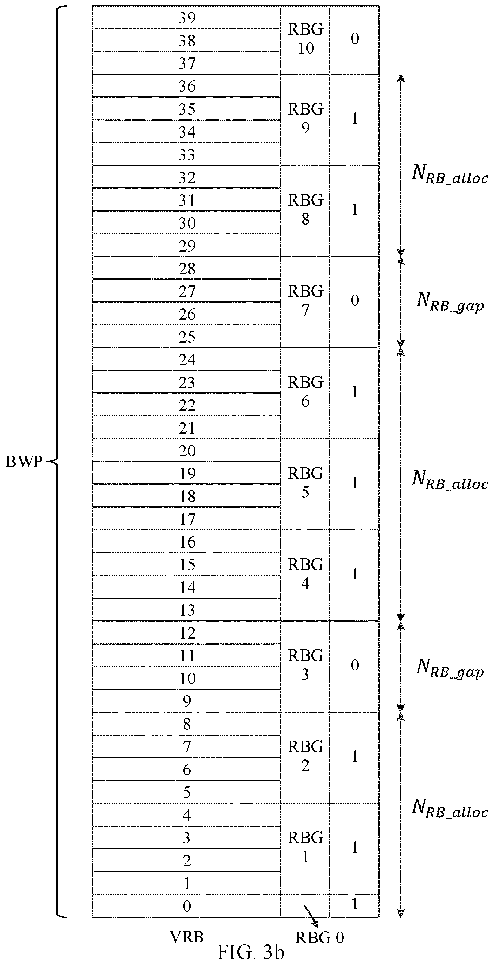

$N_{RB\_alloc}$ is a quantity of RBs allocated to the terminal device, and $N_{RB\_gap}$ is a quantity of RBs that are not allocated to the terminal device in RBs allocated between the terminal device, that is, may be understood as an interval size. For details, refer to FIG. 3b.

2. Uplink resource assignment type 1

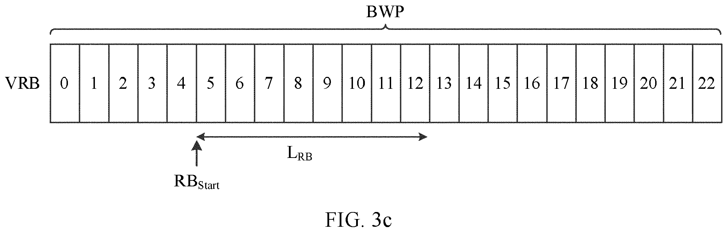

In the uplink resource assignment type 1, consecutive RBs are allocated according to an indication of a network device or a protocol definition as uplink resources. For example, a start VRB ($RB_{start}$) and a quantity of consecutively allocated RBs ($L_{RB}$) are indicated. As shown in FIG. 3c, $RB_{Start}$ is equal to 5, and $L_{RB}$ is equal to 7. In this case, VRBs 5 to 12 are allocated to a terminal device.

Based on the foregoing analysis, it can be learned that the entire BWP in the wideband slot is divided, based on a resource occupied by the terminal device to send the uplink channel (for example, the PUCCH or the PUSCH) or the signal, into a first part and a second part that are inconsecutive in frequency domain. After the frequency domain in the wideband slot is divided, the wideband slot cannot be allocated to another terminal device for use in at least one of the following scenarios. This affects flexibility of resource scheduling of the network device, and affects a transmission speed and a throughput of the terminal device.

Scenarios in which allocation of the frequency domain resource in the wideband slot to the another terminal device by the network device is affected include but are not limited to the following:

Scenario 1: Uplink is single-carrier waveform.
Scenario 2: Uplink is a CP-OFDM waveform and in an intra-band.
Scenario 3: Uplink is a CP-OFDM waveform, a single-carrier unit (component carrier, CC) or in inter-band CA, and a spacing limitation is not met.
Scenario 4: Single carrier and CP-OFDM waveform in the FR 2.

In embodiments of this application, in the C-TDD transmission mode, the frequency domain resource in the wideband slot is divided by the frequency domain resource occupied by the uplink information of the terminal device, and as a result, the network device cannot allocate a remaining frequency domain resource in the wideband slot to another terminal device for use. In embodiments of this application, when the terminal device needs to perform transmission of the uplink information in the wideband slot, the terminal device discards the uplink information transmitted in the wideband slot, or changes a resource location of the uplink information, so that the remaining frequency domain resource in the wideband slot can be scheduled to the another terminal device for use.

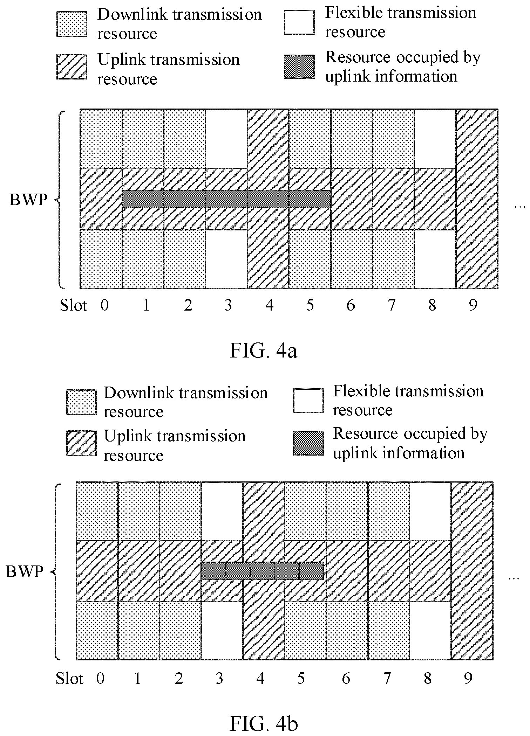

It should be noted that a terminal device sends an uplink channel (for example, a PUCCH or a PUSCH) in a plurality of time domain units in FIG. 4a may be sending a same transport block (transport block, TB) or same uplink control information (uplink control information, UCI). When the same TB is sent in the plurality of time domain units, channel repetition may be sent in the plurality of time domain units. For example, when the same PUSCH is sent in the plurality of time domain units, the same TB is carried on the PUSCH, and PUSCH repetition is transmitted on the plurality of time domain resources; or when the same PUCCH is sent in the plurality of time domain units, the same UCI is carried on the PUCCH, and PUCCH repetition is transmitted on the plurality of time domain resources.

PUSCH repetition: A same TB is transmitted on a PUSCH for a plurality of times. The transmitted TB may be referred to as PUSCH repetition, or a physical resource carrying a same TB on a PUSCH may be referred to as PUSCH repetition. For example, that a terminal device sends PUSCH repetition may also be represented as that a terminal device repeatedly sends same uplink information on a PUSCH. Correspondingly, that a network device may receive PUSCH repetition sent by the terminal device may also be represented as that a network device receives the same uplink information repeatedly sent by the terminal device on the PUSCH.

PUCCH repetition is similar to PUSCH repetition, and details are not described herein again.

For ease of understanding of embodiments of this application, the following several descriptions are provided.

First, channels such as a PUSCH and a PUCCH in embodiments of this application may be understood as physical resources carrying information, or may be understood as information transmitted on these resources. For example, that a terminal device sends information on a PUSCH may also be represented as that a terminal device sends a PUSCH. A person skilled in the art can understand the meaning.

Second, "first", "second", "third" and various numbers in the following embodiments are merely used for differentiation for ease of description, and are not used to limit the scope of embodiments of this application. For example, different uplink information, time domain units, time-frequency locations, resources, or frequency hopping information are distinguished.

Third, "predefinition" may be implemented by pre-storing corresponding code, a table, or another manner that may be used to indicate related information in a device (for example, including a terminal device and a network device), for example, implemented in a protocol definition manner. A specific implementation of predefinition is not limited in this application.

"Preconfiguration" may be implemented by pre-storing corresponding code, a table, or another manner that may be used to indicate related information in a device (for example, including a terminal device and a network device), or may be implemented through signaling preconfiguration. For example, the network device is implemented through signaling preconfiguration. A specific implementation of preconfiguration is not limited in this application.

In embodiments of this application, a preset resource may be a predefined resource, or may be a preconfigured resource, or a resource indicated by a base station by using radio resource control (radio resource control, RRC) and/or downlink control information (downlink control information, DCI).

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

The following describes a communication method in embodiments of this application with reference to the accompanying drawings.

It should be understood that, for ease of understanding and description, the following mainly describes the method provided in embodiments of this application by using uplink sending corresponding to a terminal device as an example. The terminal device may be, for example, any of the terminal devices in the communication system shown in FIG. 1, for example, the terminal device 130 or the terminal device 140. The network device may be the network device 120 in the communication system shown in FIG. 1.

However, it should be understood that this should not constitute any limitation on an execution body of the method provided in this application. Any device that can perform, by using a program that can run code of the method provided in embodiments of this application, the method provided in embodiments of this application may be used as an execution body of the method provided in embodiments of this application. For example, the terminal device shown in the following embodiments may also be replaced with a component in the terminal device, for example, a chip, a chip system, or another functional module that can invoke a program and execute the program.

First, it should be noted that a resource occupied by repeatedly sent uplink information may be preset, for example, preconfigured by the network device, defined in a protocol, or preset by the terminal device. For example, the network device indicates, to the terminal device, a quantity of pieces of repeatedly sent uplink information (namely, a quantity of times of repeatedly sent uplink information) and a time-frequency location of a first piece of uplink information. A time-frequency location of the other uplink information may be determined based on the time-frequency location of the first piece of uplink information. For example, a frequency domain location of the other uplink information in the repeatedly sent uplink information is the same as a frequency domain location of the first piece of uplink information. Time domain locations of the repeatedly sent uplink information meet a preset rule (for example, consecutive in time domain).

The preset resource occupied by the repeatedly sent uplink information and a relationship between the preset resource and a time domain unit, a slot, and a symbol are described as follows:

A time domain resource for information transmission between the terminal device and the network device may include a plurality of slots, and each slot includes a plurality of symbols. For example, in a 5G communication technology, one slot includes seven symbols or 14 symbols.

A type of the symbol in the slot is not limited in embodiments of this application.

All symbols in one slot may be symbols of a same type. For example, symbols in one slot may be all symbols for uplink transmission, first symbols, or second symbols. With reference to FIG. 4a to FIG. 4c, symbols in slots 0, 1, 2, 5, 6, and 7 are all first symbols, symbols in slots 4 and 9 are all symbols for uplink transmission, and symbols in slots 3 and 8 are all second symbols.

It should be noted that all frequency domain resources on the symbol for uplink transmission are for uplink transmission; some frequency domain resources on the first symbol are for uplink transmission, and the other frequency domain resources are for downlink transmission; and some frequency domain resources on the second symbol are for uplink transmission, and the other frequency domain resources are for flexible transmission. When the frequency domain resource for flexible transmission on the second symbol is for uplink transmission, the second symbol is a symbol for uplink transmission; or when the frequency domain resource for flexible transmission on the second symbol is for downlink transmission, the second symbol is a first symbol. All frequency domain resources may be all RBs or all resource elements REs in a BWP. Some frequency domain resources may be some RBs or some REs in a BWP, and the other frequency domain resources may be other RBs or other REs in the BWP. When all frequency domain resources in one symbol are for uplink transmission, the symbol may be understood as an uplink symbol.

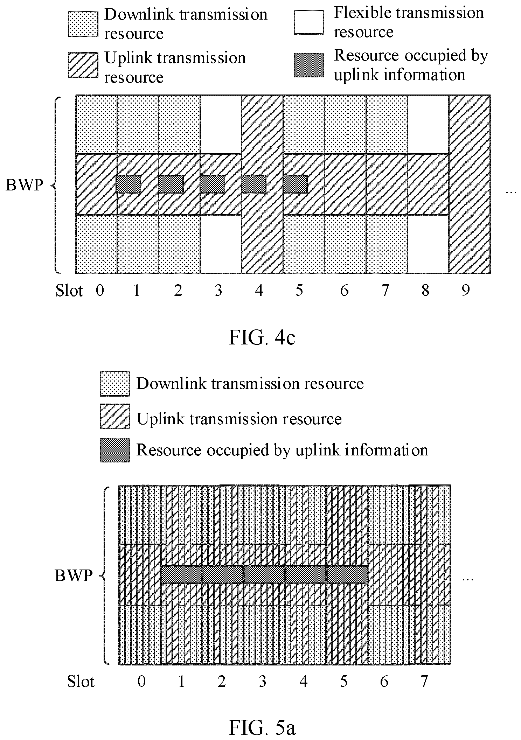

One slot may include different types of symbols. For example, one slot may include at least one of a symbol for uplink transmission (uplink symbol), a symbol for downlink transmission (downlink symbol), a flexible symbol, a first symbol, and a second symbol (the second symbol may be considered as a symbol for uplink transmission or a first symbol based on preconfiguration or predefinition, and if the second symbol is not mentioned in any one of the following embodiments, it does not mean that the second symbol is not included). With reference to FIG. 5a to FIG. 5c, a slot 1 is used as an example. First, fourth, sixth, and seventh symbols are first symbols, and second, third, and fifth symbols are symbols for uplink transmission. In addition, one slot may include a same symbol type or different symbol types. For example, slots 1, 2, and 4 include both symbols for uplink transmission and first symbols, slots 3 and 6 include only first symbols, and a slot 5 includes only symbols for uplink transmission. It should be understood that any slot may include a second symbol, and the second symbol is actually represented as the first symbol or the symbol for uplink transmission in FIG. 5a based on preconfiguration and predefinition, and therefore is not further identified. It should be noted that symbol types included in slots in FIG. 5a to FIG. 5c are merely examples, and do not constitute any limitation on embodiments of this application. For example, a sequence and a quantity of different types of symbols in each slot in FIG. 5a to FIG. 5c are not limited.

In embodiments of this application, the time domain unit may be a slot or at least one symbol in a slot. In addition, a length of time domain of the time domain unit may be irrelevant to a length of time domain occupied by one piece of repeatedly sent uplink information (which is specifically explained in the following Implementation 2), or may be related to a length of time domain occupied by one piece of repeatedly sent uplink information (which is specifically explained in the following Implementation 1). In embodiments of this application, the time domain unit may include a first time domain unit and a second time domain unit, and a quantity of uplink transmission symbols in the first time domain unit is greater than a quantity of uplink transmission symbols in the second time domain unit. Optionally, the first time domain unit may include only a symbol for uplink transmission, and the second time domain unit may include only a first symbol.

In Implementation 1, the length of time domain of the time domain unit is related to or equal to the length of time domain occupied by one piece of repeatedly sent uplink information. For example, if the piece of repeatedly sent uplink information occupies four symbols, the time domain unit includes four symbols. Symbols in the time domain unit are consecutive. At least the following three examples are included in Implementation 1.

Example 1: If time domain resources occupied by the repeatedly sent uplink information are consecutive, namely, 14 symbols, the time domain unit may be one slot.

For example, as shown in FIG. 5a, there are five pieces of repeatedly sent uplink information, that is, the uplink information is sent once in each of the five slots. Each time domain unit may be a slot, and each piece of repeatedly sent uplink information occupies a first symbol to a last symbol in each time domain unit. One slot may include a same symbol type or different symbol types.

Example 2: If time domain resources occupied by the repeatedly sent uplink information are consecutive, and the length of time domain occupied by the piece of repeatedly sent uplink information is fewer than 14 symbols, the time domain unit may be at least one symbol. For example, the length of the time domain unit is equal to the length of time domain occupied by the piece of repeatedly sent uplink information.

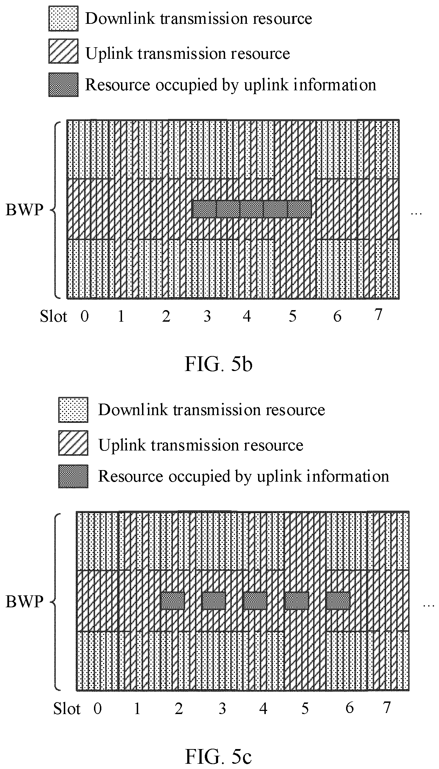

For example, as shown in FIG. 5b, each piece of repeatedly sent uplink information occupies four symbols in one slot. In this case, symbols in one time domain unit may belong to different slots. For example, a first piece of uplink information occupies a first symbol to a fourth symbol in a slot 3; a second piece of uplink information occupies a fifth symbol to a seventh symbol in the slot 3 and occupies a first symbol in a slot 4; a third piece of uplink information occupies a second symbol to a fifth symbol in the slot 4; a fourth piece of uplink information occupies a sixth symbol and a seventh symbol in the slot 4 and occupies a first symbol and a second symbol in a slot 5; and a fifth piece of uplink information occupies a third symbol to a sixth symbol in the slot 5. The four symbols occupied by each piece of repeatedly sent uplink information may be same or different types of symbols in one slot, or may be same or different symbols in different slots.

Optionally, start locations of all time domain units in slots in which the time domain units are located may be the same or may be different. In FIG. 5b, only an example in which start locations of all time domain units in slots in which the time domain units are located are different is used. Specifically, a start location of a preset resource is used as a start location of one time domain unit, and then four consecutive symbols are consecutively found as one time domain unit. For example, if the start location of the preset resource is a first symbol in a slot 3, the first symbol in the slot 3 to a fourth symbol in the slot 3 are one time domain unit, a fifth symbol in the slot 3 to a first symbol in a slot 4 are one time domain unit, a second symbol in the slot 4 to a fifth symbol in the slot 4 are one time domain unit, and so on. Details are not described again. Optionally, when the start locations of the time domain units in the slots in which the time domain units are located are different, the start locations of the time domain units may alternatively be determined symbol by symbol. For example, if the start location of the preset resource is a first symbol in a slot 3, the first symbol in the slot 3 to a fourth symbol in the slot 3 are one time domain unit, then a second symbol in the slot 3 to a fifth symbol in the slot 3 are one time domain unit, and so on. Details are not described again. Optionally, when the start locations of the time domain units in the slots in which the time domain units are located are different, the start locations of the time domain units may alternatively be determined every M symbols, where M is an integer greater than 1. For example, if the start location of the preset resource is a symbol a, a start location of the time domain unit is the symbol a, and a start location of a next time domain unit is a symbol a+M.

Example 3: If time domain resources occupied by the repeatedly sent uplink information are inconsecutive, and the length of time domain occupied by the piece of repeatedly sent uplink information is fewer than 14 symbols, the time domain unit may be at least one symbol. For example, the length of the time domain unit is equal to the length of time domain occupied by the piece of repeatedly sent uplink information.

For example, as shown in FIG. 5c, the time domain unit includes four symbols. Optionally, start locations of all time domain units in slots in which the time domain units are located may be the same or may be different. In FIG. 5c, only an example in which start locations of all time domain units in slots in which the time domain units are located are the same is used. Specifically, the start locations of all the time domain units in the slots in which the time domain units are located are start locations of preset resources. For example, if the start location of the preset resource is a first symbol in a slot 2, a start symbol of the time domain unit is a first symbol in each slot, and the length of the time domain unit is four consecutive symbols, the time domain unit in one slot starts from a first symbol to a fourth symbol in the slot. In other words, first to fourth symbols in each slot are one time domain unit, which is equivalent to that there is one time domain unit every 14 symbols. The four symbols occupied by each piece of repeatedly sent uplink information may be same or different types of symbols in one slot.

In some embodiments, in addition to a symbol for uplink transmission, the first time domain unit may further include a first symbol. In other words, a quantity of symbols for uplink transmission in the first time domain unit is greater than or equal to n, where n is a positive integer, and n is less than or equal to the length of the time domain of the resource occupied by the repeatedly sent uplink information. In addition to a first symbol, the second time domain unit may further include a symbol for uplink transmission. In other words, a quantity of symbols for uplink transmission in the second time domain unit is less than n, where
n may be preconfigured by a network device, defined in a protocol, or indicated by a base station. For example, the base station indicates a first resource, and n is a quantity of symbols in the first resource, or is a quantity of symbols for uplink transmission in the first time domain unit, that is, a quantity of symbols for uplink transmission in the first resource.

For example, in FIG. 5a, n is an integer greater than 0 and less than or equal to 7. It is assumed that n is 3, the slots 1, 5, and 7 are the first time domain units, and the slots 0, 2, 3, 4, and 6 are the second time domain units. In FIG. 5b, n is an integer greater than 0 and less than or equal to 4. It is assumed that n is 2, time domain units respectively corresponding to a first piece of uplink information and a second piece of uplink information include 0 symbols for uplink transmission and are the second time domain units, time domain units respectively corresponding to a third piece of uplink information and a fourth piece of uplink information include 2 symbols for uplink transmission and are the first time domain units, and symbols in a time domain unit corresponding to a fifth piece of uplink information are symbols for uplink transmission and the time domain unit is the first time domain unit. In FIG. 5c, n is an integer greater than 0 and less than or equal to 4. It is assumed that n is 2, time domain units in the slots 4 and 5 are the first time domain units, and time domain units in the slots 2, 3, and 6 are the second time domain units.

Implementation 2: Any time domain unit is one slot, and one piece of repeatedly sent uplink information occupies at least one symbol. At least the following three examples are included in Implementation 2.

In a first example, one piece of repeatedly sent uplink information occupies one slot. As shown in FIG. 4a, in the five slots occupied by the five pieces of repeatedly sent uplink information, the slots 1, 2, and 5 are the second time domain units, the slot 4 is the first time domain unit, and the slot 3 is the first time domain unit when the flexible transmission resource is configured or indicated as the uplink transmission resource, the slot 3 is the second time domain unit when the flexible transmission resource is configured or indicated as the downlink transmission resource, or the slot 3 is the first time domain unit if the flexible transmission resource is not configured or indicated as the uplink transmission resource, or is not configured or indicated as the downlink transmission resource, that is, the resource is still the flexible transmission resource.

In a second example, one piece of repeatedly sent uplink information occupies some symbols in at least one slot. As shown in FIG. 4b, in the five pieces of repeatedly sent uplink information, a first piece of uplink information occupies the first symbol to the fourth symbol in the slot 3, and a second piece of uplink information occupies the fifth symbol in the slot 3 to the first symbol in the slot 4.... One piece of uplink information may be located in one time domain unit. For example, in FIG. 4b, the first piece of uplink information is located in the slot 3, a third piece of uplink information is located in the slot 4, and a fifth piece of uplink information is located in the slot 5. Alternatively, one piece of uplink information may be located in two time domain units. For example, in FIG. 4b, the second piece of uplink information is located in the slot 3 and the slot 4, and a fourth piece of uplink information is located in the slot 4 and the slot 5.

In a third example, one piece of repeatedly sent uplink information occupies some symbols in one slot. As shown in FIG. 4c, in the five pieces of repeatedly sent uplink information, each piece of uplink information is located in one time domain unit.

In Implementation 2, one time domain unit (namely, one slot) may include a same symbol type or different symbol types. When a quantity of symbols for uplink transmission included in a time domain unit is greater than or equal to n, the time domain unit is the first time domain unit; or when a quantity of symbols for uplink transmission included in a time domain unit is less than n, the time domain unit is the second time domain unit.

For example, when the time domain units are the slots shown in any one of FIG. 4a to FIG. 4c, the first time domain units (for example, the slots 4 and 9, and the slot 3 in which the flexible transmission resource is for uplink transmission) may be the wideband slots in the foregoing content. Generally, each symbol in the wideband slot is a symbol for uplink transmission, but there is a case in which some symbols in the wideband slot are symbols for uplink transmission and some symbols are first symbols. The second time domain unit (for example, the slots 0 to 2, 5 to 7, and the slots 3 and 8 used when the flexible transmission resource is for downlink transmission) may be the narrowband slots in the foregoing content. Generally, each symbol in the narrowband slot is a first symbol, but there is a case in which some symbols in the narrowband slot are first symbols and some symbols are symbols for uplink transmission.

It should be noted that both the first time domain unit and the second time domain unit are time domain unit types, but not specifically a time domain unit. For example, the slots 1 and 2 and the slots 5 to 7 in FIG. 4a are all the second time domain units, the slots 4 and 9 are both the first time domain units, and the slots 3 and 8 are the first time domain units when the flexible transmission resources are for uplink transmission or the second time domain unit when the flexible transmission resource is for downlink transmission.

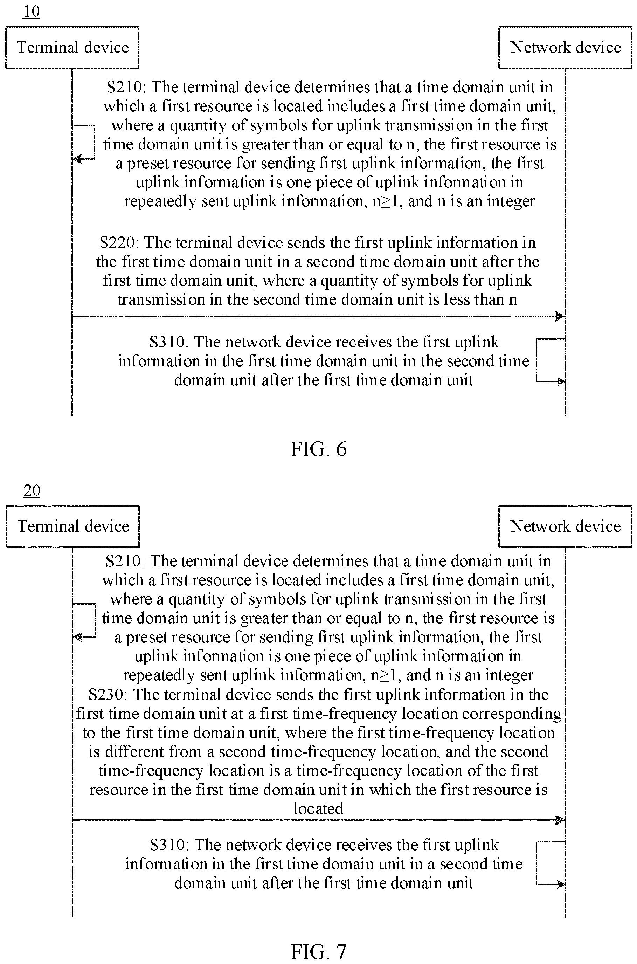

The following separately describes embodiments of this application by using three possible implementations shown in FIG. 6 to FIG. 8 as examples.

FIG. 6 is a schematic flowchart of a communication method 10 according to an embodiment of this application. As shown in FIG. 6, the method 10 may include S210, S220, and S310. The following describes steps in the method 10.

S210: A terminal device determines that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer.

S220: The terminal device sends the first uplink information in the first time domain unit in a second time domain unit after the first time domain unit, where a quantity of symbols for uplink transmission in the second time domain unit is less than n.

Correspondingly, a network device receives the first uplink information in the first time domain unit in the second time domain unit after the first time domain unit.

S310: The network device determines that the time domain unit in which the first resource is located includes the first time domain unit.

It should be noted that a sequence of performing 310, S210, and S220 is not limited in this embodiment of this application. For example, S310 may be performed after S220, or may be performed synchronously with S210.

It should be noted that, in a process in which the network device receives the uplink information repeatedly sent by the terminal device, the network device can determine that the time domain unit in which the first resource is located includes the first time domain unit, and receive the first uplink information in the first time domain unit in the second time domain unit after the first time domain unit. A process in which the network device determines whether the time domain unit in which the first resource is located includes the first time domain unit, and determines, when determining that the time domain unit in which the first resource is located includes the first time domain unit, a resource location for receiving the first uplink information is similar to a process in which the terminal device determines a sending resource and sends the first uplink information. The following uses only the terminal device as an example for description.

It should be understood that, for the network device, the first resource is a preset resource for receiving the first uplink information.

As described above, the resource occupied by the repeatedly sent uplink information may be preset. For example, the first resource may be preconfigured by the network device, defined in a protocol, preset by the terminal device, or indicated by a base station by using RRC and/or DCI. A PUSCH is used as an example. The base station indicates the first resource by using a frequency domain resource assignment (frequency domain resource assignment) field and a time domain resource assignment (time domain resource assignment) field in the DCI. The frequency domain resource assignment includes the uplink resource assignment types 0 and 1 described above. A PUCCH is used as an example. The base station indicates the first resource by using a PUCCH resource indicator (PUCCH resource indicator) field in the DCI. In FIG. 4a or FIG. 5a, a time domain resource of the first resource is all symbols in a slot, for example, the resource occupied by the uplink information shown in FIG. 4a or FIG. 5a. In FIG. 4b or FIG. 5b, a time domain resource of the first resource is four consecutive symbols. In first repetition, the first resource is the first to the fourth symbols in the slot 3. In second repetition, the first resource is the fifth to the seventh symbols in the slot 3, and further includes the first symbol in the slot 4. In other words, the first resources in repetition are consecutive in time domain. In FIG. 4c or FIG. 5c, a time domain resource of the first resource is a first symbol to a fourth symbol in one slot. To be specific, in first repetition, the first resource is a first symbol to a fourth symbol in a slot x; and in second repetition, the first resource is a first symbol to a fourth symbol in a slot x+1, where x is a nonnegative integer. A frequency domain resource of the first resource shown in any one of FIG. 4a to FIG. 5c is the same in each repetition.

In first repetition, a slot in which the first resource is located is also indicated by RRC and/or DCI. A dynamically scheduled PUSCH is used as an example. A base station indicates, by using k2 in a time domain resource assignment field in the DCI, the slot for the first repetition. For example, if a PDCCH carrying the DCI for scheduling the PUSCH is in a slot y, the first repetition is in a slot y+k2, where y and k2 are integers. A dynamically scheduled PUCCH is used as an example. A base station indicates, by using a physical downlink shared channel (physical downlink shared channel, PDSCH) to a HARQ-ACK feedback indicator field (indicating k1) in the DCI, the slot for the first repetition. For example, if the PDSCH scheduled by the DCI is in a slot y, the first repetition is in a slot y+k1, where k1 is an integer.

That the terminal device repeatedly sends a plurality of pieces of uplink information may be understood as sequentially sending each piece of uplink information. For the first uplink information, the terminal device determines whether the time domain unit in which the first resource of the terminal device is located includes the first time domain unit. If the time domain unit in which the first resource is located includes the first time domain unit, it indicates that when the first uplink information is sent on the first resource, a frequency domain resource corresponding to a symbol for uplink transmission in the first time domain unit is divided, and the network device cannot configure a remaining divided frequency domain resource in the first time domain unit for another terminal device to use, and the first uplink information cannot continue to be sent on the first resource. In some embodiments, a transmission resource for uplink information after the first uplink information in the repeatedly sent first uplink information also needs to be adaptively changed. If the time domain unit in which the first resource is located does not include the first time domain unit, the first uplink information may continue to be sent on the first resource. Further, in some embodiments, if a time domain unit in which a resource (namely, a previous "first resource") corresponding to one piece of uplink information repeatedly sent last time is located includes a first time domain unit, and the first resource for the first uplink information sent this time is updated, the terminal device performs a process in this embodiment of this application based on an updated first resource. Because the uplink information is repeatedly sent, that the terminal device sends the first uplink information in the first time domain unit in the second time domain unit after the first time domain unit may be understood as that the first uplink information in the first time domain unit is delayed or delayed sending in the second time domain unit, but a quantity of repetition times remains unchanged.

In any one of the following embodiments, it is assumed that a flexible transmission resource is for downlink transmission, that is, the slot 3 in FIG. 4a to FIG. 4c is considered as the second time domain unit.

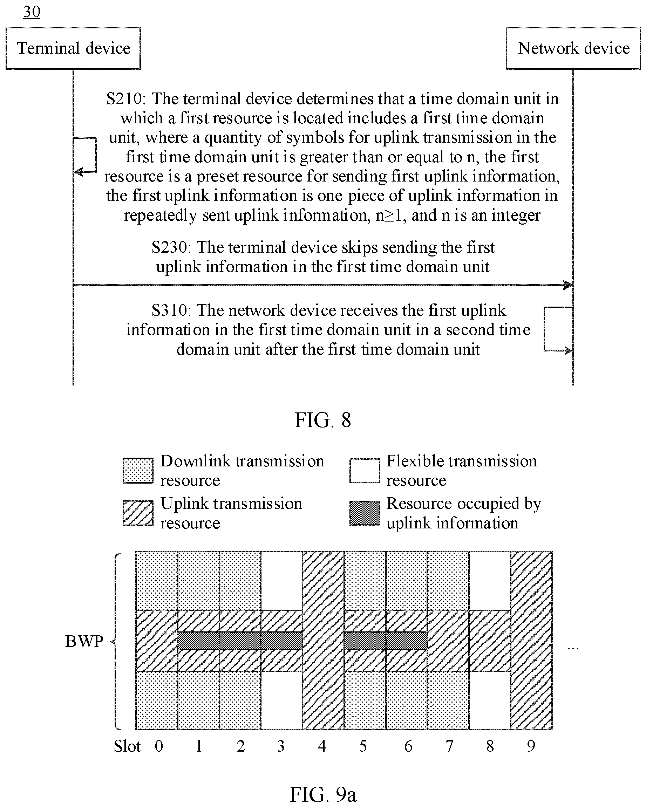

Refer to FIG. 4a. When the first uplink information is a fourth piece of uplink information, the terminal device determines that the time domain unit in which the first resource is located includes the first time domain unit (the slot 4), and the terminal device sends the fourth piece of uplink information in the second time domain unit (namely, the slot 5) after the first time domain unit. Refer to FIG. 9a. Repeated uplink information is not sent in a slot 4, a fourth piece of uplink information is sent in a slot 5, and a fifth piece of uplink information is sent in a slot 6. In other words, when the time domain unit in which the first resource is located includes the first time domain unit, sending of both the first uplink information and uplink information after the first uplink information are delayed for one time domain unit. It should be noted that the terminal device first uses a first piece of uplink information as the first uplink information, and when determining that a slot 1 in which the first resource for the first piece of uplink information is located is not the first time domain unit, the terminal device sends the first piece of uplink information on the first resource; the terminal device continues to use a preset resource of a second piece of uplink information as the first resource, determines that the time domain unit in which the first resource for the second piece of uplink information is located does not include the first time domain unit, and still sends the second piece of uplink information on the first resource; and so on, until it is determined that the time domain unit in which the first resource for a fourth piece of uplink information is located includes the first time domain unit, the terminal device sends the fourth piece of uplink information in a slot 5. Further, because sending of the fourth piece of uplink information is delayed in the slot 5, the first resource for a fifth piece of uplink information is delayed to a slot 6. The terminal device determines whether the slot 6 is the first time domain unit, and determines a sending resource for the fifth piece of uplink information. With reference to FIG. 9a, the slot 6 is a non-first time domain unit, and the terminal device still sends the fifth piece of uplink information in the slot 6.

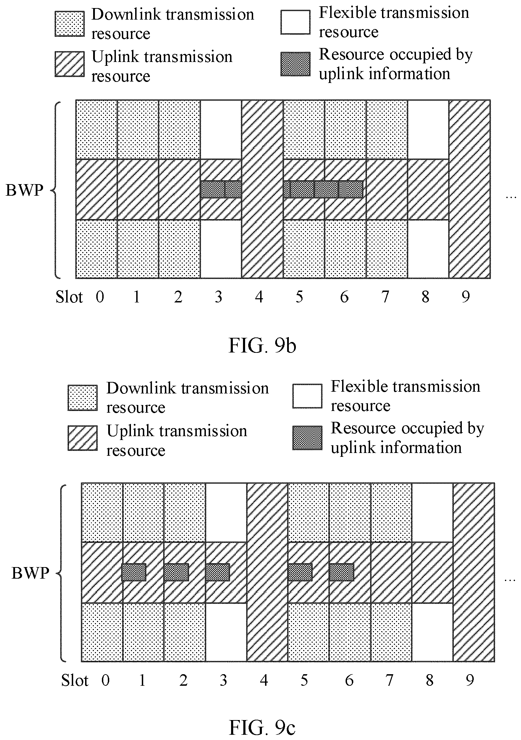

Refer to FIG. 4b. When the first uplink information is a second piece, a third piece, or a fourth piece of uplink information, the terminal device determines that the time domain unit in which the first resource is located includes the first time domain unit (the slot 4), and the terminal device sends, in the second time domain unit (that is, the slot 5) after the first time domain unit, uplink information in the slot 4 in FIG. 4b (namely, partial information of the second piece of uplink information, the third piece of uplink information, and partial information of the fourth piece of uplink information). Further, sending of a fifth piece of uplink information is delayed after the fourth piece of uplink information. For an actual transmission resource of the repeatedly sent uplink information, refer to FIG. 9b. The terminal device sequentially uses each of the five pieces of repeatedly sent uplink information as the first uplink information, and determines a sending resource of the uplink information. This is similar to that in the embodiment shown in FIG. 9a, and details are not described herein again.

In some embodiments, the terminal device may determine, based on a comparison result between the quantity of symbols occupied by the first resource in the first time domain unit and a preset quantity of symbols, whether to perform S220. For example, if a quantity of symbols occupied by a first resource of a second piece of uplink information in a first time domain unit is 1, and is less than a preset quantity of symbols 3, the second piece of uplink information is still sent on the first resource; or if a quantity of symbols occupied by a first resource of a third piece of uplink information in a first time domain unit is 4, and is greater than a preset quantity of symbols 3, sending of the third piece of uplink information is delayed in a second time domain unit (a slot 5), and sending of fourth and fifth pieces of uplink information following the third piece of uplink information is sequentially delayed after the third piece of uplink information. An occupied symbol may be a symbol for uplink transmission. In addition, an occupied symbol may alternatively be a first symbol. For example, a first resource is four symbols in time domain, and if a quantity of first symbols occupied by a first resource of a second piece of uplink information in the first time domain unit is 1, and is less than a preset quantity of symbols 2, sending of the second piece of uplink information is delayed in a second time domain unit.

Refer to FIG. 4c. When the first uplink information is a fourth piece of uplink information, the terminal device determines that the time domain unit in which the first resource is located includes the first time domain unit (the slot 4), and the terminal device sends the fourth piece of uplink information in the second time domain unit (namely, the slot 5) after the first time domain unit. For an actual transmission resource of the repeatedly sent uplink information, refer to FIG. 9c. The terminal device sequentially uses each of the five pieces of repeatedly sent uplink information as the first uplink information, and determines a sending resource of the uplink information. This is similar to that in the embodiment shown in FIG. 9a, and details are not described herein again.

Optionally, a symbol location at which the fourth piece of uplink information is sent in the second time domain unit (namely, the slot 5) may be the same as or different from a symbol location of the first resource in the first time domain unit. This is not limited in this application. For example, if the second time domain unit includes both a first symbol and a symbol for uplink transmission, a time domain location with a larger quantity of first symbols is selected to send the fourth piece of uplink information. For example, it is assumed that first four symbols in the slot 5 are first symbols, and last three symbols are symbols for uplink transmission, the fourth piece of uplink information is sent on the first four symbols.

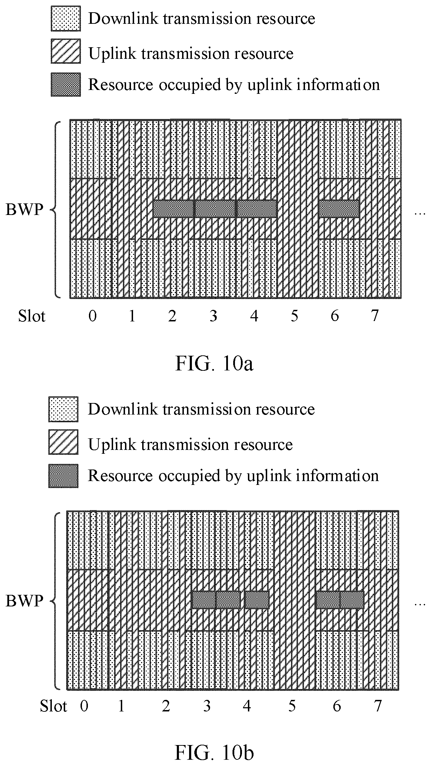

Refer to FIG. 5a. It is assumed that n is 3, and when the first uplink information is a first piece of uplink information, and the terminal device determines that the time domain unit in which the first resource is located includes the first time domain unit (the slot 1), the terminal device sends the first piece of uplink information in the second time domain unit (namely, the slot 2) after the first time domain unit. Refer to FIG. 10a. No repeated uplink information is sent in a slot 1, a first piece of uplink information is sent in a slot 2, a second piece of uplink information is sent in a slot 3, a third piece of uplink information is sent in a slot 4, no uplink information is sent in a slot 5, a fourth piece of uplink information is sent in a slot 6, no uplink information is sent in a slot 7, and a fifth piece of uplink information is sent in a first second time domain unit after the slot 7.

Refer to FIG. 5b. It is assumed that n is 2, and when the first uplink information is a third piece of uplink information, and the terminal device determines that the time domain unit in which the first resource is located includes the first time domain unit (the second symbol to the fifth symbol in the slot 4), the terminal device sends the third piece of uplink information in the second time domain unit after the first time domain unit.

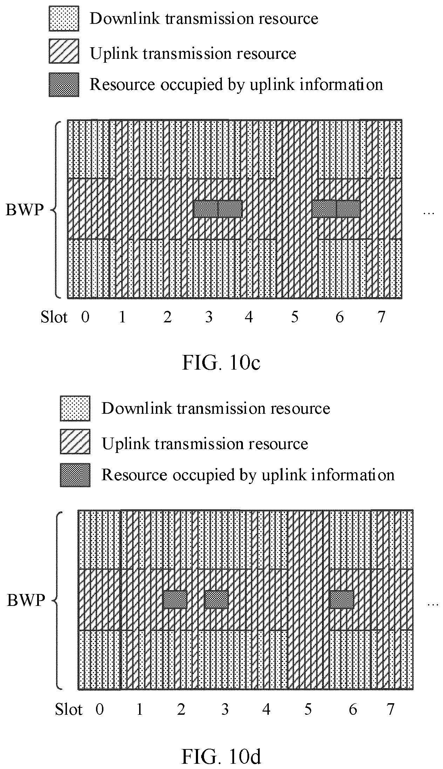

In FIG. 5b, based on different manners of determining a time domain unit, there are at least two possible second time domain units after the first time domain unit. 1. The second time domain unit is determined symbol by symbol until the second time domain unit whose quantity of symbols for uplink transmission is less than n is determined. Refer to FIG. 10b, the second time domain unit is a third symbol to a sixth symbol in a slot 4. Further, the second time domain units for sending a fourth piece of uplink information and a fifth piece of uplink information are sequentially determined after a time domain location of the third piece of uplink information. 2. The second time domain unit is determined time domain unit (every four symbols are one time domain unit) by time domain unit, until it is determined that a quantity of symbols for uplink transmission is less than n second time domain units. Refer to FIG. 10c, a second symbol to a fifth symbol in a slot 4 are one time domain unit (first time domain unit), a sixth symbol in the slot 4 to a second symbol in a slot 5 are one time domain unit (first time domain unit), a third symbol in the slot 5 to a sixth symbol in the slot 5 is one time domain unit (first time domain unit), and a seventh symbol in the slot 5 to a third symbol in a slot 6 is one time domain unit (second time domain unit). Therefore, the second time domain unit after the first time domain unit is the seventh symbol in the slot 5 to the third symbol in the slot 6.

Refer to FIG. 5c. It is assumed that n is 2, and when the first uplink information is a third piece of uplink information, and the terminal device determines that the time domain unit in which the first resource is located includes the first time domain unit (a first symbol to a fourth symbol in a slot 4), the terminal device sends the third piece of uplink information in the second time domain unit (the slot 6) after the first time domain unit, and determines, after the time domain unit of the third piece of uplink information, the second time domain units for sending fourth and fifth pieces of uplink information. For an actual transmission resource of the repeatedly sent uplink information, refer to FIG. 10d. It should be noted that the fourth and fifth pieces of uplink information in FIG. 10d are not drawn.

It should be noted that, for ease of description, one piece of the repeated uplink information in any one of embodiments in FIG. 4a to FIG. 10d is briefly referred to as uplink information, and the uplink information may include UCI and/or a transport block TB.

In any embodiment shown in FIG. 9a to FIG. 10d, when the first uplink information is sent in the second time domain unit after the first time domain unit corresponding to the first resource, that the terminal device sends the uplink information in the first time domain unit at a second time-frequency location of the second time domain unit is used as an example. In other words, when sending the uplink information in the first time domain unit in the second time domain unit, the terminal device does not change a relative location of the first uplink information in the time domain unit. For example, a frequency domain location for sending the uplink information in the second time domain unit is the same as a frequency domain location of the first resource in the first time domain unit, and a time domain location for sending the uplink information in the second time domain unit is the same as a time domain location of the first resource in the first time domain unit, for example, a first symbol to a fourth symbol in the time domain unit. However, this does not constitute any limitation on this application. For example, a time domain location for sending the uplink information in the second time domain unit may be different from a time domain location of the first resource in the first time domain unit, and/or a frequency domain location for sending the uplink information in the second time domain unit may be different from a frequency domain location of the first resource in the first time domain unit.

In this embodiment, when the terminal device needs to send the repeatedly sent first uplink information in the first time domain unit, the terminal device delays sending of the uplink information in the first time domain unit to the second time domain unit after the first time domain unit. This avoids a case in which because a frequency domain resource in the first time domain unit is divided by the first uplink information, the frequency domain resource cannot be allocated to another terminal device for use, and resource scheduling flexibility of the network device and a transmission speed and a throughput of the terminal device are affected.

Optionally, when the repeatedly sent uplink information is PUCCH repetition, the terminal device receives the DCI sent by the network device, where the DCI indicates a transmission resource. The terminal device receives the PDSCH based on the transmission resource, of the PDSCH, indicated by the DCI. Further, after receiving the PDSCH, the terminal device sends PUCCH repetition to the network device. Alternatively, the terminal device sends PUCCH repetition in a semi-persistent scheduling (semi-persistent scheduling, SRS) manner. In this case, the network device may not send the DCI to the terminal device.

Optionally, when the repeatedly sent uplink information is PUSCH repetition, the terminal device receives the DCI sent by the network device, where the DCI indicates a PUSCH transmission resource. The terminal device sends PUSCH repetition based on the PUSCH transmission resource indicated by the DCI. The terminal device sends PUSCH repetition in an SRS manner. Alternatively, the terminal device sends PUSCH repetition based on higher layer signaling. In this case, the network device may not send the DCI to the terminal device.

FIG. 7 is a schematic flowchart of a communication method 20 according to an embodiment of this application. As shown in FIG. 7, the method 20 may include S210, S230, and S310. The following describes S230 in the method 20.

S230: A terminal device sends first uplink information in a first time domain unit at a first time-frequency location corresponding to the first time domain unit, where the first time-frequency location is different from a second time-frequency location, and the second time-frequency location is a time-frequency location of a first resource in a first time domain unit in which the first resource is located.

Correspondingly, a network device receives the first uplink information in the first time domain unit at the first time-frequency location corresponding to the first time domain unit.

It should be noted that, in a process in which the network device receives uplink information repeatedly sent by the terminal device, the network device can determine that the time domain unit in which the first resource is located includes the first time domain unit, and receive the first uplink information in the first time domain unit at the first time-frequency location corresponding to the first time domain unit. A process in which the network device determines whether the time domain unit in which the first resource is located includes the first time domain unit, and determines, when determining that the time domain unit in which the first resource is located includes the first time domain unit, a resource location for receiving the first uplink information is similar to a process in which the terminal device determines a sending resource and sends the first uplink information. The following uses only the terminal device as an example for description.

S210 in the embodiment shown in FIG. 7 is the same as S210 shown in FIG. 6, and details are not described herein again.

In the embodiment shown in FIG. 7, the first resource, the first time domain unit, and the second time domain unit are all consistent with those in the foregoing content. Details are not described herein again.

Optionally, the first time-frequency location may be preconfigured by the network device, defined in a protocol, or preset by the terminal device. For example, the network device sends a first parameter to the terminal device, where the first parameter indicates the first time-frequency location.

Optionally, the first parameter includes frequency domain offset information or frequency domain resource information. The offset information may indicate an offset between the first time-frequency location and the second time-frequency location, for example, include a time domain offset and/or a frequency domain offset. For example, if the frequency domain offset is y, a frequency domain location in the first time-frequency location is equal to a frequency domain location in the second time-frequency location plus y, or is equal to a size of (a frequency domain location in the second time-frequency location plus y) mod BWP, where mod is a modulo operation. The frequency domain resource information may indicate a frequency domain location in the first time-frequency location. For example, the frequency domain resource information may be a PRB index. In some embodiments, the first parameter may include time domain resource information, and the time domain resource information indicates a time domain location of the first time-frequency location. It should be understood that if the first parameter includes only the frequency domain resource information, a time domain location of the first time-frequency location may be the same as a time domain location of the second time-frequency location. Similarly, if the first parameter includes only the time domain resource information, a frequency domain location of the first time-frequency location may be the same as a frequency domain location of the second time-frequency location.

Optionally, the foregoing descriptions may be understood as that the first uplink information may be sent at different time domain locations in different time domain units. For example, a time-frequency location at which the first uplink information is sent in the first time domain unit is different from a time-frequency location at which the first uplink information is sent in the second time domain unit. The terminal device determines, based on different time domain units, corresponding time domain locations to send the first uplink information. For example, if the terminal device determines that the first uplink information is sent in the first time domain unit, the terminal device sends the first uplink information at the time domain location corresponding to the first time domain unit; or if the first uplink information is sent in the second time domain unit, the terminal device sends the first uplink information at the time domain location corresponding to the second time domain unit. Similarly, the network device receives the first uplink information at the corresponding time domain location corresponding to the determined time domain unit.

It should be noted that the first time-frequency location is different from at least one of a time domain resource and a frequency domain resource of a time-frequency location (namely, the second time-frequency location) of the first resource in the first time domain unit in which the first resource is located. For example, the first time-frequency location and the second time-frequency location occupy different time domains and a same frequency domain in the first time domain unit, the first time-frequency location and the second time-frequency location occupy a same time domain and different frequency domains in the first time domain unit, or the first time-frequency location and the second time-frequency location occupy different time domains and different frequency domains in the first time domain unit.

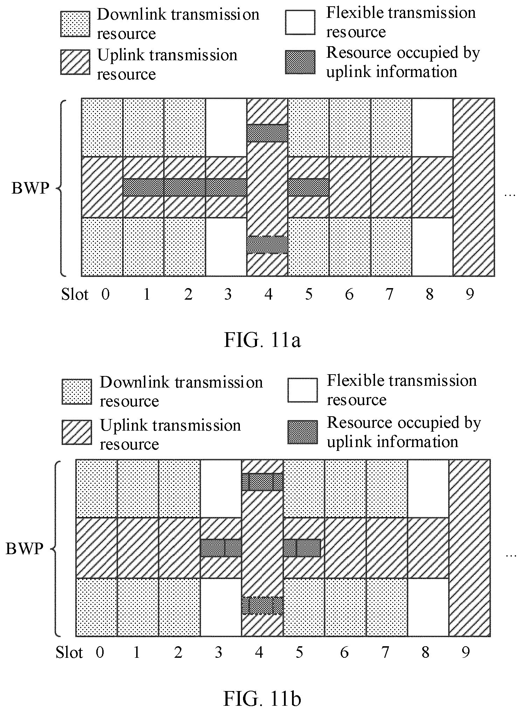

Refer to FIG. 4a. When the first uplink information is the fourth piece of uplink information, and the terminal device determines that the time domain unit in which the first resource is located includes the first time domain unit (the slot 4), the terminal device sends the fourth piece of uplink information at a first time-frequency location corresponding to the first time domain unit. Refer to FIG. 11a. In FIG. 11a, time domain of a first time-frequency location is the same as that of a second time-frequency location, and frequency domain of the first time-frequency location is higher than or lower than frequency domain of the second time-frequency location (in a slot 4 in FIG. 11a, a dashed box is used to mark the first time-frequency location as one of two time-frequency locations of a higher frequency domain and a lower frequency domain in the figure). That the frequency domain of the first time-frequency location is higher than the frequency domain of the second time-frequency location may be understood as that a frequency of the first time-frequency location is higher than a frequency of the second time-frequency location. For example, a physical resource block (physical resource block, PRB) index corresponding to the first time-frequency location is greater than a PRB index corresponding to the second time-frequency location. Certainly, when a smaller PRB index indicates a higher frequency, the PRB index corresponding to the first time-frequency location is less than a PRB index corresponding to the second time-frequency location. A case in which the frequency domain of the first time-frequency location is lower than the frequency domain of the second time-frequency location corresponds to the foregoing case. Details are not described herein again.

Refer to FIG. 4b. When the first uplink information is the second, third, or fourth piece of uplink information, and the terminal device determines that the time domain unit in which the first resource is located includes the first time domain unit (the slot 4), the terminal device sends, at the first time-frequency location corresponding to the first time domain unit, the uplink information in the slot 4 in FIG. 4b (namely, partial information of the second piece of uplink information, the third piece of uplink information, and partial information of the fourth piece of uplink information). For an actual transmission resource of the repeatedly sent uplink information, refer to FIG. 11b. Similar to that in FIG. 11a, in FIG. 11b, time domain of a first time-frequency location is the same as that of a second time-frequency location, and a frequency domain location of the first time-frequency location is higher than or lower than a frequency domain location of the second time-frequency location. In some embodiments, the partial information of the second piece of uplink information, the third piece of uplink information, and the partial information of the fourth piece of uplink information in the slot 4 may respectively correspond to different first time-frequency locations. For example, frequency domain of a first time-frequency location corresponding to the third piece of uplink information is higher than frequency domain of the second time-frequency location; frequency domain of a first time-frequency location corresponding to the partial information of the second piece of uplink information and frequency domain of a first time-frequency location corresponding to the partial information of fourth piece of uplink information are lower than the frequency domain of the second time-frequency location; and so on.

In some embodiments, the terminal device may determine, based on a comparison result between a quantity of symbols occupied by the first resource in the first time domain unit and a preset quantity of symbols, whether to perform S230. For example, if a quantity of symbols occupied by a first resource of a second piece of uplink information in a first time domain unit is 1, and a quantity of symbols occupied by a first resource of a fourth piece of uplink information in the first time domain unit is 2, and both are less than a preset quantity of symbols 3, the second piece of uplink information is still sent on the first resource. If a quantity of symbols occupied by a first resource of a third piece of uplink information in the first time domain unit is 4, and is greater than the preset quantity of symbols 3, the third piece of uplink information is sent at a first time-frequency location corresponding to the first time domain unit.

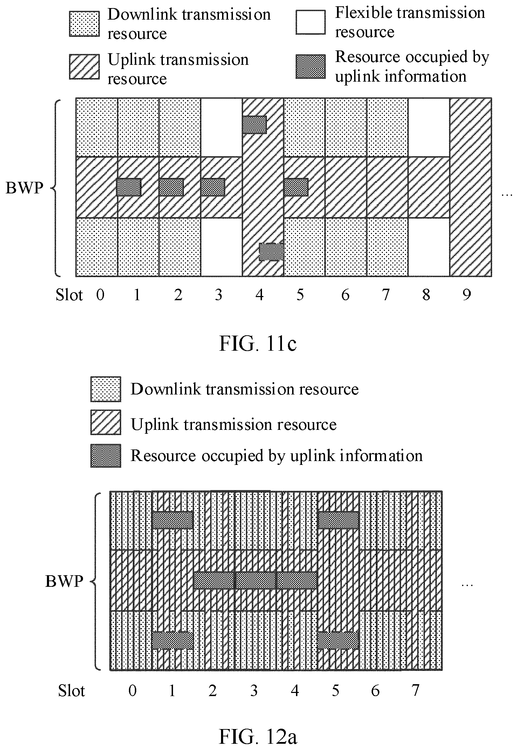

Refer to FIG. 4c. When the first uplink information is the fourth piece of uplink information, and the terminal device determines that the time domain unit in which the first resource is located includes the first time domain unit (the slot 4), the terminal device sends the fourth piece of uplink information at a first time-frequency location corresponding to the first time domain unit. For an actual transmission resource of the repeatedly sent uplink information, refer to FIG. 11c. Similar to that in FIG. 11a, time domain of a first time-frequency location identified by a solid block in FIG. 11c is the same as time domain of a second time-frequency location, and frequency domain of the first time-frequency location is higher than frequency domain of the second time-frequency location. Optionally, frequency domain of the first time-frequency location may alternatively be lower than frequency domain of the second time-frequency location. Optionally, time domain of the first time-frequency location is different from time domain of the second time-frequency location. For example, time domain of a first time-frequency location identified by a dashed box in FIG. 11c is different from time domain of a second time-frequency location, and frequency domain of the first time-frequency location is lower than frequency domain of the second time-frequency location.

Refer to FIG. 5a. It is assumed that n is 3, and when the first uplink information is the first piece of uplink information, and the terminal device determines that the time domain unit in which the first resource is located includes the first time domain unit (the slot 1), the terminal device sends the first piece of uplink information at a first time-frequency location of the slot 1. When the first uplink information is the fifth piece of uplink information, and the terminal device determines that the time domain unit in which the first resource is located includes the first time domain unit (the slot 5), the terminal device sends the fifth piece of uplink information at a first time-frequency location in the slot 5. For example, the terminal device first uses a first piece of uplink information as the first uplink information, and when determining that a slot 1 in which a first resource of the first piece of uplink information is located is the first time domain unit, the terminal device sends the first piece of uplink information at a first time-frequency location of the slot 1. The terminal device continues to use a preset resource of a second piece of uplink information as the first resource, and when determining that a time domain unit in which a first resource of the second piece of uplink information is located does not include the first time domain unit, the terminal device still sends the second piece of uplink information on the first resource, and so on, until it is determined that the time domain unit in which a first resource of a fifth piece of uplink information is located includes the first time domain unit, the terminal device sends the fifth piece of uplink information at a first time-frequency location of the slot 5. For an actual transmission resource of the repeatedly sent uplink information, refer to FIG. 12a.

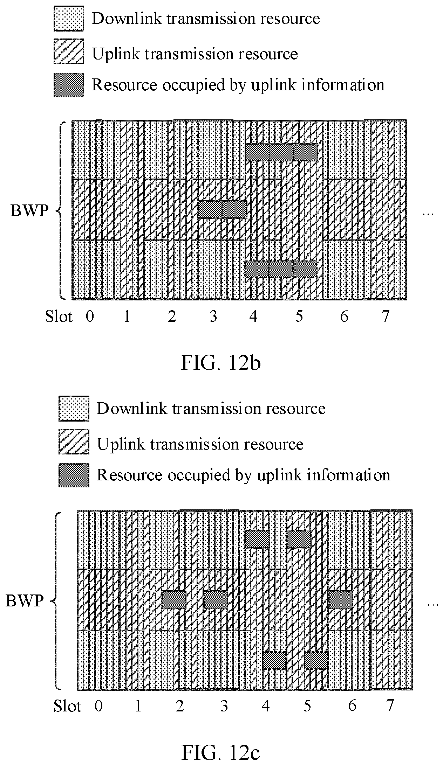

Refer to FIG. 5b. It is assumed that n is 2, and when the first uplink information is the third piece of uplink information, and the terminal device determines that the time domain unit in which the first resource is located includes the first time domain unit (the second symbol to the fifth symbol in the slot 4), the terminal device sends the third piece of uplink information at a first time-frequency location (the second symbol to the fifth symbol in the slot 4) of the first time domain unit. Similarly, time domain units in which preset resources of a fourth piece of uplink information and a fifth piece of uplink information are located include the first time domain unit. The terminal device sends the fourth piece of uplink information at a first time-frequency location from the sixth symbol in the slot 4 to the second symbol in the slot 5, and sends the fifth piece of uplink information at a first time-frequency location from the third symbol to the sixth symbol in the slot 5. Optionally, the third piece of uplink information, the fourth piece of uplink information, and the fifth piece of uplink information may respectively correspond to different first time-frequency locations. A relationship between the first time-frequency location and the second time-frequency location is the same as or similar to that in any one of the foregoing embodiments, and details are not described herein again. For an actual transmission resource of the repeatedly sent uplink information, refer to FIG. 12b.

Refer to FIG. 5c. It is assumed that n is 2, and when the first uplink information is the third piece of uplink information, and the terminal device determines that the time domain unit in which the first resource is located includes the first time domain unit (the first symbol to the fourth symbol in the slot 4), the terminal device sends the third piece of uplink information at a first time-frequency location corresponding to the first time domain unit (the slot 4). Similarly, the terminal device sends the fourth piece of uplink information at a first time-frequency location in the slot 5. For an actual transmission resource of the repeatedly sent uplink information, refer to FIG. 12c. Refer to FIG. 12c (a first time-frequency location in each of a slot 4 and a slot 5 is marked as one of two time-frequency locations of a higher frequency domain and a lower frequency domain in the figure by using a dashed box). Time domain of the first time-frequency location may be the same as or different from time domain of a second time-frequency location, and frequency domain of the first time-frequency location may be higher than or lower than frequency domain of the second time-frequency location. Optionally, first time-frequency locations corresponding to a third piece of uplink information and a fifth piece of uplink information may be different. For example, frequency domain of a first time-frequency location of the third piece of uplink information is higher than the frequency domain of the second time-frequency location, and frequency domain of a first time-frequency location of the fifth piece of uplink information is higher than the frequency domain of the second time-frequency location. Optionally, time domain of the first time-frequency location of the third piece of uplink information may be a third symbol to a sixth symbol in the slot 4, or a fourth symbol to a seventh symbol in the slot 4, and the frequency domain of the first time-frequency location may be the same as the frequency domain of the second time-frequency location.

It should be noted that, for ease of description, one piece of uplink information in the repeated uplink information in any one of embodiments in FIG. 4a to FIG. 10c is briefly referred to as uplink information.

In this embodiment, when the terminal device needs to send the repeatedly sent first uplink information in the first time domain unit, the terminal device changes the uplink information in the first time domain unit from the second time-frequency location to the first time-frequency location. This implements flexible scheduling of a sending resource. Further, the frequency domain of the first time-frequency location is higher than or lower than the frequency domain of the second time-frequency location. This avoids a case in which because a frequency domain resource in the first time domain unit is divided by the first uplink information, the frequency domain resource cannot be allocated to another terminal device for use, and resource scheduling flexibility of the network device and a transmission speed and a throughput of the terminal device are affected.

FIG. 8 is a schematic flowchart of a communication method 30 according to an embodiment of this application. As shown in FIG. 8, the method 30 may include S210, S240, and S310. The following describes S240 in the method 30.

S240: A terminal device skips sending first uplink information in a first time domain unit.

Correspondingly, a network device skips receiving the first uplink information in the first time domain unit.

It should be noted that, in a process in which the network device receives uplink information repeatedly sent by the terminal device, the network device can determine that a time domain unit in which a first resource is located includes the first time domain unit, and determine to skip receiving the first uplink information in the first time domain unit. A process in which the network device determines whether the time domain unit in which the first resource is located includes the first time domain unit, and determines, when determining that the time domain unit in which the first resource is located includes the first time domain unit, to skip receiving the first uplink information is similar to a process in which the terminal device determines a sending resource and sends the first uplink information. The following uses only the terminal device as an example for description.

In some embodiments, that the network device skips receiving the first uplink information in the first time domain unit may be understood as that the network device skips performing any operation.

S210 in the embodiment shown in FIG. 8 is the same as S210 shown in FIG. 6, and details are not described herein again.

In the embodiment shown in FIG. 8, the first resource, the first time domain unit, and a second time domain unit are all consistent with those in the foregoing content. Details are not described herein again.

It should be understood that the terminal device skips sending the first uplink information in the first time domain unit may be discarding the first uplink information, that is, discarding a PUCCH or a PUSCH carrying the first uplink information, and skipping sending, in the first time domain unit, any piece of uplink information in the repeatedly sent uplink information. In other words, sending of one piece of uplink information or a part of one piece of uplink information in the repeatedly sent uplink information whose preset resource is in the first time domain unit is abandoned, and other information is still sent on the original preset resource. In this case, it is equivalent to that a quantity of repetition times of actual sending is reduced.

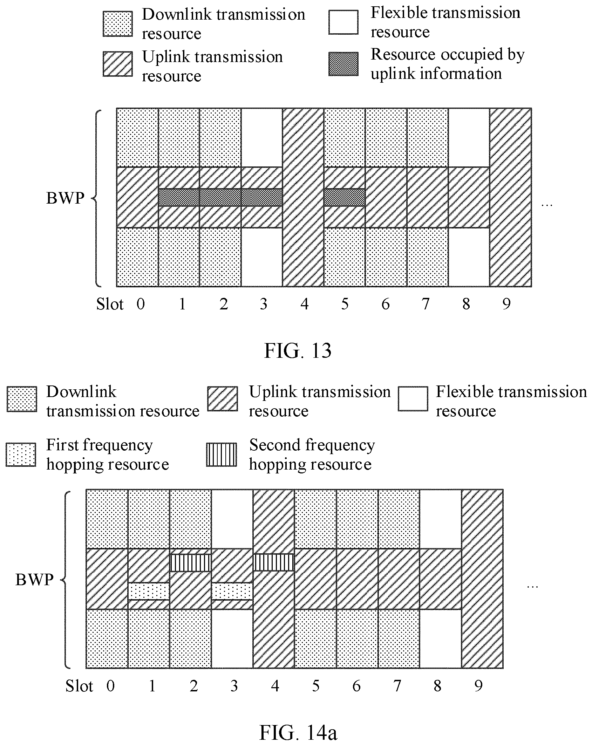

Refer to FIG. 4a. When the first uplink information is the fourth piece of uplink information, and the terminal device determines that the time domain unit in which the first resource is located includes the first time domain unit (the slot 4), the terminal device discards the fourth piece of uplink information, and skips sending the uplink information, and skips sending any piece of uplink information in the repeatedly sent uplink information in the slot 4. Refer to FIG. 13.

Refer to FIG. 4b. When the first uplink information is the second, third, or fourth piece of uplink information, and the terminal device determines that the time domain unit in which the first resource is located includes the first time domain unit (the slot 4), the terminal device discards the uplink information (namely, the partial information of the second piece of uplink information, the third piece of uplink information, and the partial information of the fourth piece of uplink information) sent in the slot 4 in FIG. 4b, skips sending the uplink information, and skips sending any piece of uplink information in the repeatedly sent uplink information in the slot 4.

In some embodiments, the terminal device may determine, based on a comparison result between a quantity of symbols occupied by the first resource in the first time domain unit and a preset quantity of symbols, whether to perform S240. For example, if a quantity of symbols occupied by a first resource of a second piece of uplink information in a first time domain unit is 1, and a quantity of symbols occupied by a first resource of a fourth piece of uplink information in the first time domain unit is 2, and both are less than a preset quantity of symbols 3, the second piece of uplink information is still sent on the first resource. If a quantity of symbols occupied by a first resource of a third piece of uplink information in the first time domain unit is 4, and is greater than the preset quantity of symbols 3, the terminal device skips sending the third piece of uplink information.

Refer to FIG. 4c. When the first uplink information is the fourth piece of uplink information, and the terminal device determines that the time domain unit in which the first resource is located includes the first time domain unit (the slot 4), the terminal device skips sending the fourth piece of uplink information.

Refer to FIG. 5a. It is assumed that n is 3, and when the first uplink information is the first piece of uplink information, and the terminal device determines that the time domain unit in which the first resource is located includes the first time domain unit (the slot 1), the terminal device skips sending the first piece of uplink information, and skips sending any piece of uplink information in the repeatedly sent uplink information in the slot 1. Similarly, when the first uplink information is the fifth piece of uplink information, and the terminal device determines that the time domain unit in which the first resource is located includes the first time domain unit (the slot 5), the terminal device skips sending the fifth piece of uplink information, and skips sending any piece of uplink information in the repeatedly sent uplink information in the slot 5.

Refer to FIG. 5b. It is assumed that n is 2, and when the first uplink information is the third piece of uplink information, and the terminal device determines that the time domain unit in which the first resource is located includes the first time domain unit (the second symbol to the fifth symbol in the slot 4), the terminal device skips sending the third piece of uplink information in the first time domain unit (the second symbol to the fifth symbol in the slot 4), and skips sending any piece of uplink information in the repeatedly sent uplink information in the first time domain unit (the second symbol to the fifth symbol in the slot 4). Similarly, the terminal device skips sending any piece of uplink information in the repeatedly sent uplink information on the sixth symbol in the slot 4 to the second symbol in the slot 5, skips sending any piece of uplink information in the repeatedly sent uplink information on the third symbol to the sixth symbol in the slot 5, and the terminal device skips sending the fourth uplink information and the fifth uplink information.

Refer to FIG. 5c. It is assumed that n is 2, and when the first uplink information is the third piece of uplink information, and the terminal device determines that the time domain unit in which the first resource is located includes the first time domain unit (the first symbol to the fourth symbol in the slot 4), the terminal device skips sending the third piece of uplink information in the first time domain unit (the slot 4), and skips sending any piece of uplink information in the repeatedly sent uplink information in the first time domain unit (the slot 4). Similarly, the terminal device skips sending the fourth piece of uplink information in the slot 5, and skips sending any piece of uplink information in the repeatedly sent uplink information in the slot 5.

It should be noted that, for ease of description, one piece of uplink information in the repeated uplink information in any one of embodiments in FIG. 4a to FIG. 10c is briefly referred to as uplink information.

In this embodiment, when the terminal device needs to send the repeatedly sent first uplink information in the first time domain unit, the terminal device skips sending the uplink information in the first time domain unit. This avoids a case in which because a frequency domain resource in the first time domain unit is divided by the first uplink information, the frequency domain resource cannot be allocated to another terminal device for use, and resource scheduling flexibility of the network device and a transmission speed and a throughput of the terminal device are affected. In addition, compared with a manner of delaying sending or changing the time-frequency location of the first resource in the first time domain unit, this embodiment improves information processing efficiency and transmission efficiency.

In any one of embodiments shown in FIG. 6 to FIG. 8, the first uplink information includes first frequency hopping information and/or second frequency hopping information, the first resource includes a first frequency hopping resource and a second frequency hopping resource, the first frequency hopping resource is a preset resource for sending the first frequency hopping information in the first uplink information, and the second frequency hopping resource is a preset resource for sending the second frequency hopping information in the first uplink information.

Optionally, inter-slot frequency hopping, intra-slot frequency hopping, and inter-repetition frequency hopping may be performed on the PUCCH or the PUSCH carrying the first uplink information.

It should be noted that when the first uplink information includes the first frequency hopping information and/or the second frequency hopping information, the network device determines that the time domain unit in which the first resource is located is the first time domain unit, and receives the first uplink information in the first time domain unit in the second time domain unit after the first time domain unit, receives the first uplink information in the first time domain unit at the first time-frequency location corresponding to the first time domain unit, or skips receiving the first uplink information in the first time domain unit. A specific implementation process of the network device is similar to that of the terminal device, and technical effect of the network device are the same as or similar to that of the terminal device. The following uses the implementation process of the terminal device as an example for description.

It should be understood that, for the network device, the first frequency hopping resource is a preset resource for receiving the first frequency hopping information in the first uplink information, and the second frequency hopping resource is a preset resource for receiving the second frequency hopping information in the first uplink information.

FIG. 14a is a schematic diagram of inter-slot frequency hopping according to this embodiment of this application. Refer to FIG. 14a. In the repeatedly sent uplink information, any piece of frequency hopping information occupies one slot, or occupies some symbols in one slot. For a slot 4 (the first time domain unit), sending of a fourth piece of uplink information (namely, second frequency hopping) in the slot 4 may be delayed in a slot 5 (the second time domain unit); or a fourth piece of uplink information is sent at a first time-frequency location in the slot 4, where frequency domain of the first time-frequency location is higher than or lower than a time-frequency location of the second frequency hopping resource in the slot 4; or second frequency hopping information in a second piece of uplink information is skipped sending. During inter-slot frequency hopping, the first resource repeated once may be the first frequency hopping resource or the second frequency hopping resource.

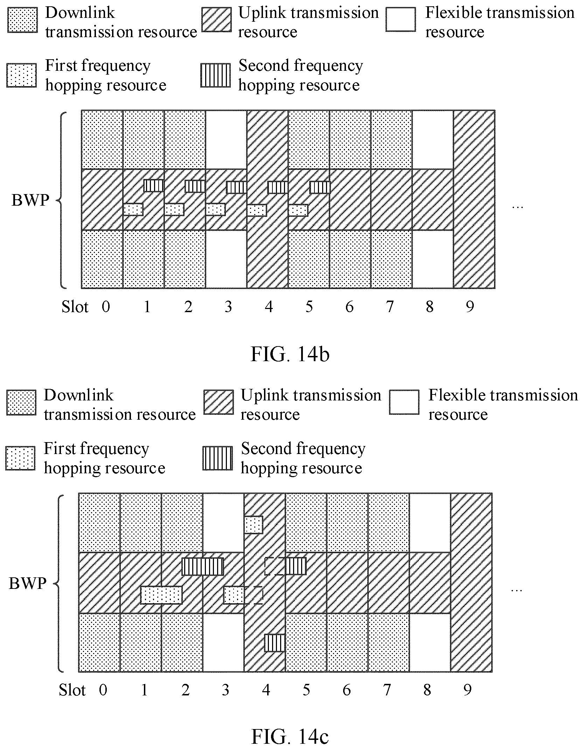

FIG. 14b is a schematic diagram of intra-slot frequency hopping according to this embodiment of this application. Refer to FIG. 14b. In five pieces of repeatedly sent uplink information, each piece of uplink information occupies one slot, or each piece of uplink information occupies some symbols of one slot. In other words, first frequency hopping information and second frequency hopping information in each piece of uplink information is in one slot, and corresponds to one time of repetition. For a slot 4 (the first time domain unit), sending of first frequency hopping information and second frequency hopping information in a fourth piece of uplink information in the slot 4 may be delayed in a slot 5 (the second time domain unit); or a fourth piece of uplink information is sent at a first time-frequency location in the slot 4, where frequency domain of the first time-frequency location is higher than or lower than a time-frequency location of the fourth piece of uplink information in the slot 4; or a fourth piece of uplink information is skipped sending.

In the embodiment shown in FIG. 14b, when the fourth uplink information is sent at the first time-frequency location in the slot 4, it should be noted that the first time-frequency location includes a time-frequency location for the first frequency hopping information and a time-frequency location for the second frequency hopping information. Generally, the time-frequency location for the first frequency hopping information is different from the time-frequency location for the second frequency hopping information. In this case, the first parameter sent by the network device to the terminal device may be a parameter array, namely, two parameters, including offset information and/or frequency domain resource information indicating the time-frequency location for the first frequency hopping information, and offset information and/or frequency domain resource information indicating the time-frequency location for the second frequency hopping information. Optionally, offset information of the first frequency hopping information indicates the time-frequency location for the first frequency hopping information and an offset of the time-frequency location for the first frequency hopping resource, and offset information of the second frequency hopping information indicates the time-frequency location for the second frequency hopping information and an offset of the time-frequency location for the second frequency hopping resource. The frequency domain resource information of the first frequency hopping information indicates a frequency domain location for the first frequency hopping information, and the frequency domain resource information of the second frequency hopping information indicates frequency domain resource for the second frequency hopping information. Optionally, the first parameter may further include time domain resource information indicating the time-frequency location for the first frequency hopping information and time domain resource information indicating the time-frequency location for the second frequency hopping information. It should be noted that, when the first parameter includes only the time domain resource information of the first frequency hopping information, the frequency domain resource of the first frequency hopping information is the same as a frequency domain resource of the first frequency hopping resource; or when the first parameter includes only the frequency domain resource information of the first frequency hopping information, the time domain resource of the first frequency hopping information is the same as a time domain resource of the first frequency hopping resource. The second frequency hopping information is similar to this, and details are not described again.

Optionally, frequency domain resource information of the first frequency hopping resource and frequency domain resource information of the second frequency hopping resource may be indicated by a group of second parameters. For example, first startRB in the second parameter indicates the frequency domain resource of the first frequency hopping resource, and first secondHopPRB in the second parameter indicates a frequency domain resource of the second frequency hopping resource. Second startRB in the first parameter indicates a frequency domain resource of the first frequency hopping information in the uplink information in the first time domain unit, and second secondHopPRB in the first parameter indicates a frequency domain resource of the second frequency hopping information in the first time domain unit. In FIG. 14b, a frequency domain resource of first frequency hopping information in the fourth piece of uplink information in the slot 4 is indicated by second startRB, and a frequency domain resource of second frequency hopping information is indicated by second secondHopPRB. In other words, the terminal device sends first frequency hopping information in each piece of uplink information in the second time domain unit (a slot 1 to a slot 3 and a slot 5) in FIG. 14b based on a frequency domain resource indicated by first startRB, and sends second frequency hopping information in each piece of uplink information based on a frequency domain resource of a second frequency hopping resource indicated by first secondHopPRB. The terminal device sends the first frequency hopping information in the fourth piece of uplink information in the first time domain unit (the slot 4) in FIG. 14b based on the frequency domain resource indicated by second startRB, and sends the second frequency hopping information in the fourth piece of uplink information based on the frequency domain resource indicated by second secondHopPRB.

FIG. 14c is a schematic diagram of inter-repetition frequency hopping according to this embodiment of this application. Generally, the PUSCH has inter-repetition frequency hopping. Refer to FIG. 14c. In repeatedly sent uplink information, when a PUSCH carrying each piece of uplink information encounters a slot boundary, original normal repetition (normal repetition) is split into actual repetition (actual repetition). For example, in a slot 4, a PUSCH with a third piece of uplink information (namely, third repetition) is split into two pieces of actual repetition from one piece of normal repetition, and some information that falls into the third piece of uplink information in the slot 4 after the splitting is sent at a time-frequency location indicated by a first parameter. Similarly, after a PUSCH with fourth uplink information (namely, fourth repetition) is split into two pieces of actual repetition, some information that falls into the fourth uplink information in the slot 4 is sent at a time-frequency location indicated by the first parameter.

In any one of embodiments shown in FIG. 6 to FIG. 8, the first resource may be a preset resource of any uplink information in the repeatedly sent uplink information.

In some embodiments, the first resource may be uplink information other than the first piece of uplink information in the repeated uplink information. In other words, when the first resource is not the preset resource of the first piece of uplink information, and when the terminal device determines that the time domain unit in which the first resource is located is the first time domain unit, the terminal device may delay the uplink information in the first time domain unit, change the time-frequency location of the first resource in the first time domain unit, or skip sending the uplink information in the first time domain unit. In this case, it is assumed that the terminal device receives an indication, from the network device, that a time domain unit in which the preset resource (referred to as a second resource below) of the repeatedly sent first piece of uplink information (namely, second uplink information) includes the first time domain unit. It indicates that the network device needs the terminal device to send the second uplink information in the first time domain unit. In other words, the network device can accept that due to division, frequency domain of the first time domain unit cannot be scheduled to another terminal device for use. In this case, the terminal device keeps sending the second uplink information on the second resource.

Further, when the network device indicates that the second uplink information is sent on the time-frequency resource of the first time domain unit, the terminal device may determine a transmission resource of third uplink information based on a second resource. The third uplink information is uplink information after the second uplink information in the repeatedly sent uplink information. It may be understood that the third uplink information may be the first uplink information.

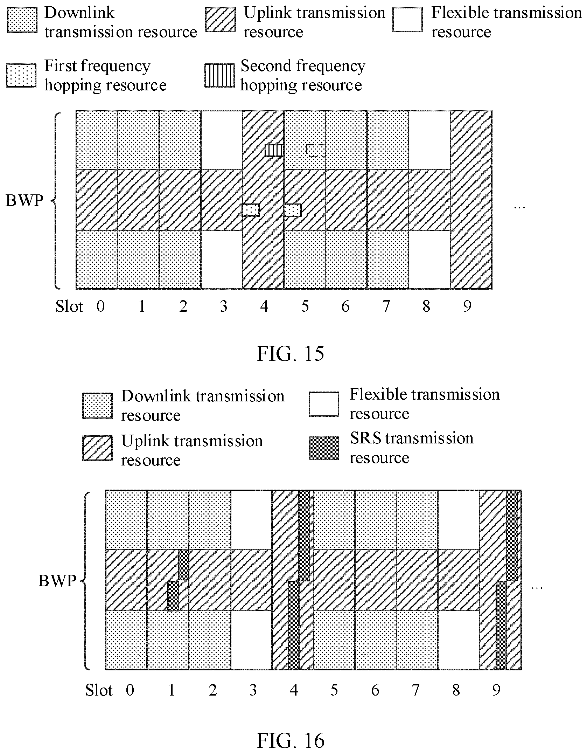

With reference to FIG. 15, the repeatedly sent uplink information includes first frequency hopping information and second frequency hopping information, and the second uplink information is sent in the first time domain unit (a slot 4). It may be understood that a preset frequency domain resource of first frequency hopping information in the third uplink information is the same as a frequency domain resource of first frequency hopping information in the second uplink information, and a preset frequency domain resource of second frequency hopping information in the third uplink information is the same as a frequency domain resource of second frequency hopping information in the second uplink information. In this case, a preset time-frequency resource of the second frequency hopping information in the third uplink information is located on a downlink transmission resource in a slot 5 (as shown in a dashed box in FIG. 15). Therefore, the second frequency hopping information cannot be sent on the preset time-frequency resource of the second frequency hopping information in the third uplink information. For this case, this embodiment provides the following solutions:

Solution 1: The terminal device sends the first frequency hopping information and/or the second frequency hopping information in the third uplink information in the second time domain unit after the first time domain unit in which the second resource is located. It should be understood that the terminal device separately determines whether a frequency domain location of the first frequency hopping information in the third uplink information and/or a frequency domain location of the second frequency hopping information in the third uplink information are/is located on an uplink transmission frequency domain resource in the second time domain unit, and the terminal device sends, in the second time domain unit, frequency hopping information located on the uplink transmission frequency domain resource in the second time domain unit. For example, with reference to FIG. 15, if the frequency domain location of the second frequency hopping information in the third uplink information is not located on the uplink transmission frequency domain resource in the second time domain unit (the slot 5), and the frequency domain location of the first frequency hopping information in the third uplink information is located on the uplink transmission frequency domain resource in the second time domain unit (the slot 5), the terminal device sends the first frequency hopping information in the third uplink information in the second time domain unit (the slot 5). Optionally, the terminal device skips sending the second frequency hopping information in the third uplink information, or sends the second frequency hopping information in a next first time domain unit (a slot 9).

Solution 2: The terminal device sends the first frequency hopping information and/or the second frequency hopping information in the third uplink information in a first time domain unit after the first time domain unit in which the second resource is located. In this solution, the terminal device may delay sending of both the first frequency hopping information and the second frequency hopping information in the third uplink information in the first time domain unit after the first time domain unit in which the second resource is located, and may delay sending of the third uplink information from the slot 5 to the slot 9 in FIG. 15 (not shown in the figure). The terminal device may further delay sending of one piece of the first frequency hopping information or the second frequency hopping information in the third uplink information to the first time domain unit after the first time domain unit in which the second resource is located. Optionally, the terminal device has sent one piece of frequency hopping information in another time domain unit (for example, a slot 5), or the terminal device deletes a frequency hopping resource that is skipped sending in the first time domain unit after the first time domain unit in which the second resource is located.

Solution 3: The terminal device skips sending the third uplink information. In other words, the terminal device discards the first frequency hopping information and the second frequency hopping information in the third uplink information.

In some embodiments, the repeatedly sent uplink information not only includes the second uplink information and the third uplink information, but also may include a third piece of uplink information, a fourth piece of uplink information, and the like. For subsequent uplink information such as the third piece of uplink information and the fourth piece of uplink information, the terminal device may perform a corresponding operation with reference to a processing manner of the third uplink information.

It may be understood that, in this embodiment, the third uplink information may be the first uplink information in the foregoing embodiment, and the terminal device may determine a sending resource of the third uplink information with reference to any one of embodiments in FIG. 6 to FIG. 8.

In this embodiment, in a scenario in which a time domain unit in which a preset resource of a first piece of uplink information in the repeatedly sent uplink information is located is the first time domain unit, the terminal device sends the uplink information on the preset resource, and determines a sending resource of a second piece of uplink information based on the preset resource of the uplink information, to prevent the second piece of uplink information from being sent on a non-uplink transmission resource, and ensure transmission reliability.

FIG. 16 is a schematic diagram of a time-frequency resource of a sounding reference signal (sounding reference signal, SRS) according to an embodiment of this application. With reference to FIG. 16, in a process of sending an SRS or in a process of receiving an SRS, a terminal device determines whether a time domain unit in which a pilot resource carrying the SRS is located is a first time domain unit. If the time domain unit in which the pilot resource is located is the first time domain unit, the terminal device determines that the pilot resource carrying the SRS is a fourth time-frequency location; or if the time domain unit in which the pilot resource is located is not the first time domain unit, for example, a second time domain unit, the terminal device determines that the pilot resource carrying the SRS is a third time-frequency location. It should be noted that the pilot resource carrying the SRS may be a predefined resource, or may be a preconfigured resource, or may be a resource indicated by a network device by using RRC and/or DCI. The first time domain unit and the second time domain unit are described above, and details are not described herein again.

Optionally, the fourth time-frequency location may be preconfigured by the network device, defined in a protocol, or preset by the terminal device. For example, the network device sends a fourth parameter to the terminal device, where the fourth parameter indicates the fourth time-frequency location. The fourth parameter may specifically include at least one of the following parameters, for example, a frequency domain location parameter, a frequency domain offset parameter, a frequency hopping parameter, where the frequency hopping parameter further includes an SRS bandwidth (corresponding to a parameter BSRS in a protocol, with a value range of 0, 1, 2, and 3), a parameter for determining whether to perform frequency hopping (corresponding to a parameter bhop in a protocol, with a value range of 0, 1, 2, and 3), and a parameter for determining an SRS bandwidth configuration (corresponding to a parameter CSRS in a protocol, with a value range of 0 to 63). CSRS may be understood as being used to determine a row in an SRS bandwidth configuration table.

Optionally, the third time-frequency location may be preconfigured by the network device, defined in a protocol, or preset by the terminal device. For example, the network device sends a third parameter to the terminal device, where the third parameter indicates the third time-frequency location. The third parameter may specifically include at least one of the following parameters, for example, a frequency domain location parameter, a frequency domain offset parameter, and a frequency hopping parameter.

Optionally, the terminal device receives DCI sent by the network device, where the DCI indicates to send the SRS. The terminal device sends the SRS in response to the DCI by using the foregoing SRS sending solution; or the terminal device may periodically send the SRS, or send the semi-persistently scheduled SRS.

This embodiment can avoid, in an SRS sending scenario, broadband resource division caused by sending the SRS at the third time-frequency location corresponding to the first time domain unit. In addition, SRSs are sent at different time domain locations in different time domain units, so that a base station can obtain quality of an uplink channel more comprehensively, thereby improving scheduling flexibility of the base station and ensuring transmission reliability.

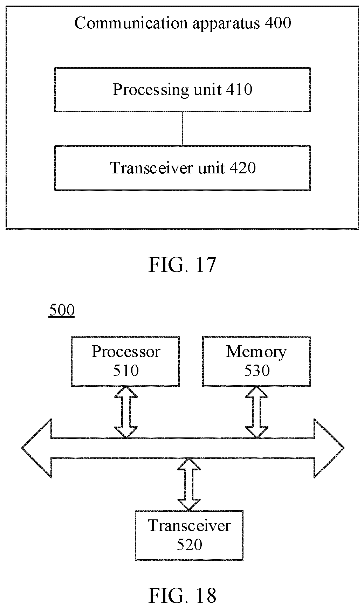

The methods provided in embodiments of this application are described above in detail with reference to FIG. 4a to FIG. 16. Apparatuses provided in embodiments of this application are described below in detail with reference to FIG. 17 to FIG. 19.

FIG. 17 is a schematic block diagram of a communication apparatus according to an embodiment of this application. As shown in FIG. 17, the apparatus 400 may include a processing unit 410 and a transceiver unit 420.

Optionally, the communication apparatus 400 may correspond to the terminal device in the foregoing method embodiments, for example, may be the terminal device, or a component (like a chip, or a chip system) disposed in the terminal device.

It should be understood that the communication apparatus 400 may correspond to the terminal device in the method 10, the method 20, or the method 30 according to embodiments of this application. The communication apparatus 400 may include units configured to perform the method performed by the terminal device in the method 10 in FIG. 6, the method 20 in FIG. 7, or the method 30 in FIG. 8. In addition, the units in the communication apparatus 400 and the foregoing other operations and/or functions are respectively intended to implement a corresponding procedure of the method 10 in FIG. 6, the method 20 in FIG. 7, or the method 30 in FIG. 8.

When the communication apparatus 400 is configured to perform the method 10 in FIG. 6, the processing unit 410 may be configured to determine that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer; and the processing unit 410 is further configured to control the transceiver unit 420 to send the first uplink information in the first time domain unit in a second time domain unit after the first time domain unit, where a quantity of symbols for uplink transmission in the second time domain unit is less than n.

When the communication apparatus 400 is configured to perform the method 20 in FIG. 7, the processing unit 410 may be configured to determine that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer; and the processing unit 410 is further configured to control the transceiver unit 420 to send the first uplink information in first time domain unit at a first time-frequency location corresponding to the first time domain unit, where the first time-frequency location is different from a second time-frequency location, and the second time-frequency location is a time-frequency location of the first resource in the first time domain unit in which the first resource is located.

When the communication apparatus 400 is configured to perform the method 30 in FIG. 8, the processing unit 410 may be configured to determine that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer; and the processing unit 410 skips sending the first uplink information in the first time domain unit.

In some embodiments, the first uplink information is uplink information other than a first piece of uplink information in the repeated uplink information.

In some embodiments, the transceiver unit 420 is further configured to: send second uplink information on a second resource, where the second uplink information is the first piece of uplink information in the repeatedly sent uplink and a time domain unit in which the second resource is located includes the first time domain unit.

In some embodiments, the processing unit 410 performs one of the following operations:

The processing unit 410 controls the transceiver unit 420 to send first frequency hopping information and/or second frequency hopping information in third uplink information in a second time domain unit after a first time domain unit in which the second resource is located;

the processing unit 410 controls the transceiver unit 420 to send first frequency hopping information and/or second frequency hopping information in third uplink information in a first time domain unit after a first time domain unit in which the second resource is located; and

the processing unit 410 skips sending the third uplink information, where the third uplink information is uplink information other than the first piece of uplink information in the repeated uplink information.

In some embodiments, the processing unit 410 is specifically configured to:

separately determine whether a frequency domain location of the first frequency hopping information in the third uplink information and/or a frequency domain location of the second frequency hopping information in the third uplink information are/is located on an uplink transmission frequency domain resource in the second time domain unit; and control the transceiver unit to send in the second time domain unit, frequency hopping information on the uplink transmission frequency domain resource in the second time domain unit.

In some embodiments, the transceiver unit 420 is further configured to: receive a first parameter from a network device, where the first parameter indicates the first time-frequency location.

In some embodiments, the first parameter includes frequency domain offset information or frequency domain resource information.

In some embodiments, the processing unit 410 is specifically configured to: control the transceiver unit to send the uplink information in the first time domain unit at the second time-frequency location corresponding to the second time domain unit after the first time domain unit.

In some embodiments, the first resource includes a first frequency hopping resource and/or a second frequency hopping resource, the first frequency hopping resource is a preset resource for sending first frequency hopping information in the first uplink information, and the second frequency hopping resource is a preset resource for sending second frequency hopping information in the first uplink information.

In some embodiments, all frequency domain resources on the symbols for uplink transmission are for uplink transmission.

In some embodiments, the second time domain unit further includes at least one first symbol, and some frequency domain resources on the at least one first symbol are for uplink transmission.

It should be understood that the processing unit 410 may be configured to perform step 210 and step 220 in the method 10, and the transceiver unit 420 may be configured to perform step 310 in the method 10 based on control of the processing unit 410. It should be understood that a specific process in which the units perform the foregoing corresponding steps is described in detail in the foregoing method embodiments, and for brevity, details are not described herein.

Optionally, the communication apparatus 400 may correspond to the network device in the foregoing method embodiments, for example, may be a network device or a component (for example, a chip or a chip system) configured in the network device.

It should be understood that the communication apparatus 400 may correspond to the network device in the method 10, the method 20, or the method 30 according to embodiments of this application. The communication apparatus 400 may include units configured to perform the method performed by the network device in the method 10 in FIG. 6, the method 20 in FIG. 7, or the method 30 in FIG. 8. In addition, the units in the communication apparatus 400 and the foregoing other operations and/or functions are respectively intended to implement a corresponding procedure of the method 10 in FIG. 6, the method 20 in FIG. 7, or the method 30 in FIG. 8.

When the communication apparatus 400 is configured to perform the method 10 in FIG. 6, the processing unit 410 may be configured to determine that a time domain unit in which a first resource is located includes a first time domain unit, where a quantity of symbols for uplink transmission in the first time domain unit is greater than or equal to n, the first resource is a preset resource for receiving first uplink information, the first uplink information is one piece of uplink information in repeatedly sent uplink information, n≥1, and n is an integer; and the processing unit 410 is further configured to control the transceiver unit 420 to receive the first uplink information in the first time domain unit in a second time domain unit after the first time domain unit, where a quantity of symbols for uplink transmission in the second time domain unit is less than n.

When the communication apparatus 400 is configured to perform the method 20 in FIG. 7, the processing unit 410 may be configured to determine that a time domain unit in which a first resource is located includes a first time domain unit, where a quantity of symbols for uplink transmission in the first time domain unit is greater than or equal to n, the first resource is a preset resource for receiving first uplink information, the first uplink information is one piece of uplink information in repeatedly sent uplink information, n≥1, and n is an integer; and the processing unit 410 is further configured to control the transceiver unit 420 to receive the first uplink information in first time domain unit at a first time-frequency location corresponding to the first time domain unit, where the first time-frequency location is different from a second time-frequency location, and the second time-frequency location is a time-frequency location of the first resource in the first time domain unit in which the first resource is located.

When the communication apparatus 400 is configured to perform the method 30 in FIG. 8, the processing unit 410 may be configured to determine that a time domain unit in which a first resource is located includes a first time domain unit, where a quantity of symbols for uplink transmission in the first time domain unit is greater than or equal to n, the first resource is a preset resource for receiving first uplink information, the first uplink information is one piece of uplink information in repeatedly sent uplink information, n≥1, and n is an integer; and the processing unit 410 skips receiving the first uplink information in the first time domain unit.

In some embodiments, the first uplink information is uplink information other than a first piece of uplink information in the repeated uplink information.

In some embodiments, the transceiver unit 420 is further configured to: receive second uplink information on a second resource, where the second uplink information is the first piece of uplink information in the repeatedly sent uplink and a time domain unit in which the second resource is located includes the first time domain unit.

In some embodiments, the processing unit 410 is further configured to perform one of the following operations:

The processing unit 410 controls the transceiver unit 420 to receive first frequency hopping information and/or second frequency hopping information in third uplink information in a second time domain unit after a first time domain unit in which the second resource is located;

the processing unit 410 controls the transceiver unit 420 to receive first frequency hopping information and/or second frequency hopping information in third uplink information in a first time domain unit after a first time domain unit in which the second resource is located; and

the processing unit 410 skips receiving third uplink information, where

the third uplink information is uplink information other than the first piece of uplink information in the repeated uplink information.

In some embodiments, the processing unit 410 is specifically configured to: separately determine whether a frequency domain location of the first frequency hopping information in the third uplink information and/or a frequency domain location of the second frequency hopping information in the third uplink information are/is located on an uplink transmission frequency domain resource in the second time domain unit; and control the transceiver unit to receive in the second time domain unit, frequency hopping information on the uplink transmission frequency domain resource in the second time domain unit.

In some embodiments, the transceiver unit 420 is further configured to: send a first parameter to a terminal device, where the first parameter indicates the first time-frequency location.

In some embodiments, the first parameter includes frequency domain offset information or frequency domain resource information.

In some embodiments, the processing unit is specifically configured to: control the transceiver unit 420 to receive the uplink information in the first time domain unit at the second time-frequency location corresponding to the second time domain unit after the first time domain unit.

In some embodiments, the first resource includes a first frequency hopping resource and/or a second frequency hopping resource, the first frequency hopping resource is a preset resource for receiving first frequency hopping information in the first uplink information, and the second frequency hopping resource is a preset resource for receiving second frequency hopping information in the first uplink information.

In some embodiments, all frequency domain resources on the symbols for uplink transmission are for uplink transmission.

In some embodiments, the second time domain unit further includes at least one first symbol, and some frequency domain resources on the at least one first symbol are for uplink transmission.

It should be understood that when the communication apparatus 400 is configured to perform the method 10 in FIG. 6, the processing unit 410 may be configured to perform step 310 and step 320 in the method 10, and the transceiver unit 420 may be configured to perform step 320 in the method 10 based on control of the processing unit 410. When the communication apparatus 400 is configured to perform the method 20 in FIG. 7, the processing unit 410 may be configured to perform step 310 and step 330 in the method 20, and the transceiver unit 420 may be configured to perform step 330 in the method 20 based on control of the processing unit 410. When the communication apparatus 400 is configured to perform the method 30 in FIG. 8, the processing unit 410 may be configured to perform step 310 and step 340 in the method 30.

It should be further understood that a specific process in which the units perform the foregoing corresponding steps is described in detail in the foregoing method embodiments, and for brevity, details are not described herein.

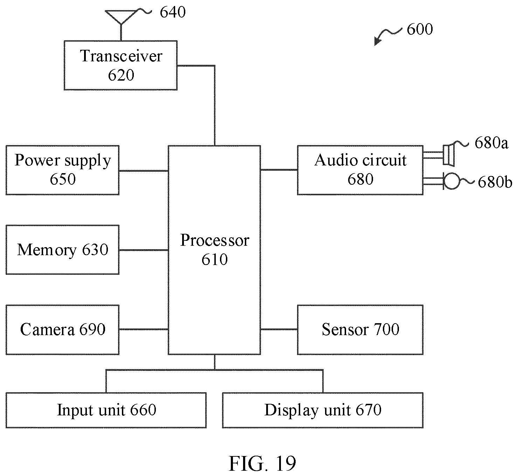

When the communication apparatus 400 is a communication device (for example, a terminal device), the transceiver unit 420 in the communication apparatus 400 may be implemented by using a transceiver, for example, may correspond to the transceiver 520 in the communication apparatus device 500 shown in FIG. 18 or the transceiver 620 in the terminal device 600 shown in FIG. 19; and the processing unit 610 in the communication apparatus 600 may be implemented by using at least one processor, for example, may correspond to the processor 510 in the communication apparatus 500 shown in FIG. 18, or the processor 610 in the terminal device 600 shown in FIG. 19.

When the communication apparatus 400 is a chip or a chip system configured in a communication device (for example, a network device), the transceiver unit 420 in the communication apparatus 400 may be implemented by using an input/output interface, a circuit, or the like; and the processing unit 410 in the communication apparatus 400 may be implemented by using a processor, a microprocessor, an integrated circuit, or the like integrated in the chip or the chip system.

FIG. 18 is another schematic block diagram of a communication apparatus according to an embodiment of this application. As shown in FIG. 18, the apparatus 500 may include a processor 510, a transceiver 520, and a memory 530. The processor 510, the transceiver 520, and the memory 530 communicate with each other through an internal connection path. The memory 530 is configured to store instructions. The processor 510 is configured to execute the instructions stored in the memory 530, to control the transceiver 520 to send a signal and/or receive a signal.

It should be understood that the communication apparatus 500 may correspond to the terminal device or the network device in the foregoing method embodiments, and may be configured to perform steps and/or procedures performed by the terminal device or the network device in the foregoing method embodiments. Optionally, the memory 530 may include a read-only memory and a random access memory, and provide instructions and data to the processor. A part of the memory may further include a non-volatile random access memory. The memory 530 may be a separate component, or may be integrated in the processor 510. The processor 510 may be configured to execute the instructions stored in the memory 530. When the processor 510 executes the instructions stored in the memory, the processor 510 is configured to perform the steps and/or procedures corresponding to the terminal device or the network device in the foregoing method embodiments.

Optionally, the communication apparatus 500 is the terminal device in the foregoing embodiments.

Optionally, the communication apparatus 500 is the network device in the foregoing embodiments.

The transceiver 520 may include a transmitter and a receiver. The transceiver 520 may further include an antenna. There may be one or more antennas. The processor 510, the memory 530, and the transceiver 520 may be devices integrated in different chips. For example, the processor 510 and the memory 530 may be integrated in a baseband chip, while the transceiver 520 may be integrated in a radio frequency chip. The processor 510, the memory 530, and the transceiver 520 may alternatively be devices integrated in a same chip. This is not limited in this application.

Optionally, the communication apparatus 500 is a component configured in the terminal device, for example, a chip or a chip system.

Optionally, the communication apparatus 500 is a component configured in the network device, for example, a chip or a chip system.

The transceiver 520 may alternatively be a communication interface, for example, an input/output interface or a circuit. The transceiver 520, the processor 510, and the memory 530 may all be integrated in a same chip, for example, integrated in a baseband chip.

FIG. 19 is a schematic diagram of a structure of a terminal device according to an embodiment of this application. The terminal device may be used in the system shown in FIG. 1. As shown in FIG. 19, the terminal device 600 includes a processor 610 and a transceiver 620. Optionally, the terminal device 600 further includes a memory 630. The processor 610, the transceiver 620, and the memory 630 may communicate with each other through an internal connection path, to transfer a control signal and/or a data signal. The memory 630 is configured to store a computer program. The processor 610 is configured to invoke the computer program from the memory 630 and run the computer program, to control the transceiver 620 to receive and transmit signals. Optionally, the terminal device 600 may further include an antenna 640, configured to send, by using a radio signal, uplink data or uplink control signaling that is output by the transceiver 620.

The processor 610 and the memory 630 may be combined into a processing apparatus. The processor 610 is configured to execute program code stored in memory 630 to implement the foregoing function. During specific implementation, the memory 630 may also be integrated in the processor 610, or independent of the processor 610. The processor 610 may correspond to the processing unit 410 in FIG. 17 or the processor 510 in FIG. 18.

The transceiver 620 may correspond to the transceiver unit 420 in FIG. 17 or the transceiver 520 in FIG. 18. The transceiver 620 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal device 600 may further include a power supply 650, configured to supply power to various components or circuits in the terminal device 600.

In addition, to improve functions of the terminal device, the terminal device 600 may further include one or more of an input unit 660, a display unit 670, an audio circuit 680, a camera 690, a sensor 700, and the like. The audio circuit may further include a speaker 680a, a microphone 680b, and the like.

It should be understood that the terminal device 600 shown in FIG. 19 can implement the processes of the terminal device in the method embodiments shown in FIG. 6, FIG. 7, and FIG. 8. The operations and/or the functions of the modules in the terminal device 600 are separately for implementing corresponding procedures in the foregoing method embodiments. For details, refer to the descriptions in the foregoing method embodiments. To avoid repetition, detailed descriptions are properly omitted herein.

When the terminal device 600 is configured to perform the operation procedures of the terminal device in the foregoing method embodiments, the processor 610 may be configured to perform actions that are implemented inside the terminal device and that are described in the foregoing method embodiments, for example, determine a resource for side transmission. The transceiver 620 may be configured to perform actions of sending by the terminal device to the network device or actions of receiving from the network device that are described in the foregoing method embodiments. For details, refer to the descriptions in the foregoing method embodiments. Details are not described herein again.

This application further provides a processing apparatus, including at least one processor. The at least one processor is configured to execute a computer program stored in a memory, so that the processing apparatus performs the methods performed by the terminal device in the foregoing method embodiments or the methods performed by the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the methods performed by the terminal device in the foregoing method embodiments or the methods performed by the network device in the foregoing method embodiments.

An embodiment of this application further provides a processing apparatus, including a processor and a memory. The memory is configured to store a computer program, and the processor is configured to invoke the computer program from the memory and run the computer program, so that the processing apparatus performs the methods performed by the terminal device in the foregoing method embodiments or the methods performed by the network device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method performed by the first terminal device in the embodiment shown in FIG. 2, FIG. 6, or FIG. 7, or the computer is enabled to perform the method performed by the second terminal device in the embodiment shown in FIG. 2 or FIG. 6.

According to the methods provided in embodiments of this application, this application further provides a computer-readable storage medium. The computer-readable storage medium stores program code. When the program code is run on a computer, the computer is enabled to perform the method performed by the first terminal device in the embodiment shown in FIG. 2, FIG. 6, or FIG. 7, or the computer is enabled to perform the method performed by the second terminal device in the embodiment shown in FIG. 2 or FIG. 6.

According to the methods provided in embodiments of this application, this application further provides a communication system. The communication system may include the foregoing first terminal device and second terminal device.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may perform communication by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units.

Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by a terminal device, that a time domain unit in which a first resource is located comprises a first time domain unit, wherein a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer; and
   performing, by the terminal device, one of the following operations:

   sending, by the terminal device, the first uplink information in the first time domain unit in a second time domain unit after the first time domain unit, wherein a quantity of symbols for uplink transmission in the second time domain unit is less than n;
   sending, by the terminal device, the first uplink information in the first time domain unit at a first time-frequency location corresponding to the first time domain unit, wherein the first time-frequency location is different from a second time-frequency location, and the second time-frequency location is a time-frequency location of the first resource in the first time domain unit in which the first resource is located; and
   skipping, by the terminal device, sending the first uplink information in the first time domain unit.

2. The method according to claim 1, wherein the first uplink information is uplink information other than a first piece of uplink information in the repeated uplink information.

3. The method according to claim 2, wherein the method further comprises:
   sending, by the terminal device, second uplink information on a second resource, wherein the second uplink information is the first piece of uplink information in the repeatedly sent uplink information, and a time domain unit in which the second resource is located comprises the first time domain unit.

4. The method according to claim 3, wherein the method further comprises one of the following:

   sending, by the terminal device, first frequency hopping information and/or second frequency hopping information in third uplink information in a second time domain unit after a first time domain unit in which the second resource is located;
   sending, by the terminal device, first frequency hopping information and/or second frequency hopping information in third uplink information in a first time domain unit after a first time domain unit in which the second resource is located; or
   skipping, by the terminal device, sending third uplink information, wherein
   the third uplink information is uplink information other than the first piece of uplink information in the repeated uplink information.

5. The method according to claim 4, wherein the sending, by the terminal device, first frequency hopping information and/or second frequency hopping information in third uplink information in a second time domain unit after a first time domain unit comprises:

separately determining, by the terminal device, whether a frequency domain location of the first frequency hopping information in the third uplink information and/or a frequency domain location of the second frequency hopping information in the third uplink information are/is located on an uplink transmission frequency domain resource in the second time domain unit; and

sending, by the terminal device in the second time domain unit, frequency hopping information on the uplink transmission frequency domain resource in the second time domain unit.

6. The method according to any one of claims 1 to 5, wherein the method further comprises:
receiving, by the terminal device, a first parameter from a network device, wherein the first parameter indicates the first time-frequency location.

7. The method according to claim 6, wherein the first parameter comprises frequency domain offset information or frequency domain resource information.

8. The method according to any one of claims 1 to 7, wherein the sending, by the terminal device, the uplink information in the first time domain unit in a second time domain unit after the first time domain unit comprises:
sending, by the terminal device, the uplink information in the first time domain unit at the second time-frequency location corresponding to the second time domain unit after the first time domain unit.

9. The method according to any one of claims 1 to 8, wherein the first resource comprises a first frequency hopping resource and/or a second frequency hopping resource, the first frequency hopping resource is a preset resource for sending first frequency hopping information in the first uplink information, and the second frequency hopping resource is a preset resource for sending second frequency hopping information in the first uplink information.

10. The method according to any one of claims 1 to 9, wherein all frequency domain resources on the symbols for uplink transmission are for uplink transmission.

11. The method according to any one of claims 1 to 10, wherein the second time domain unit further comprises at least one first symbol, and some frequency domain resources on the at least one first symbol are for uplink transmission.

12. A communication method, comprising:

determining, by a network device, that a time domain unit in which a first resource is located comprises a first time domain unit, wherein a quantity of symbols for uplink transmission in the first time domain unit is greater than or equal to n, the first resource is a preset resource for receiving first uplink information, the first uplink information is one piece of uplink information in repeatedly sent uplink information, $n \geq 1$, and n is an integer; and

performing, by the network device, one of the following operations:

receiving, by the network device, the first uplink information in the first time domain unit in a second time domain unit after the first time domain unit, wherein a quantity of symbols for uplink transmission in the second time domain unit is less than n;

receiving, by the network device, the first uplink information in the first time domain unit at a first time-frequency location corresponding to the first time domain unit, wherein the first time-frequency location is different from a second time-frequency location, and the second time-frequency location is a time-frequency location of the first resource in the first time domain unit in which the first resource is located; and

skipping, by the network device, receiving the first uplink information in the first time domain unit.

13. The method according to claim 12, wherein the first uplink information is uplink information other than a first piece of uplink information in the repeated uplink information.

14. The method according to claim 13, wherein the method further comprises:
receiving, by the network device, second uplink information on a second resource, wherein the second uplink information is the first piece of uplink information in the repeatedly sent uplink information, and a time domain unit in which the second resource is located comprises the first time domain unit.

**15.** The method according to claim 14, wherein the method further comprises one of the following:

receiving, by the network device, first frequency hopping information and/or second frequency hopping information in third uplink information in a second time domain unit after a first time domain unit in which the second resource is located;
receiving, by the network device, first frequency hopping information and/or second frequency hopping information in third uplink information in a first time domain unit after a first time domain unit in which the second resource is located; or
skipping, by the network device, receiving third uplink information, wherein
the third uplink information is uplink information other than the first piece of uplink information in the repeated uplink information.

**16.** The method according to claim 15, wherein the receiving, by the network device, first frequency hopping information and/or second frequency hopping information in third uplink information in a second time domain unit after a first time domain unit comprises:

separately determining, by the network device, whether a frequency domain location of the first frequency hopping information in the third uplink information and/or a frequency domain location of the second frequency hopping information in the third uplink information are/is located on an uplink transmission frequency domain resource in the second time domain unit; and
receiving, by the network device in the second time domain unit, frequency hopping information on the uplink transmission frequency domain resource in the second time domain unit.

**17.** The method according to any one of claims 12 to 16, wherein the method further comprises:
sending, by the network device, a first parameter to a terminal device, wherein the first parameter indicates the first time-frequency location.

**18.** The method according to claim 17, wherein the first parameter comprises frequency domain offset information or frequency domain resource information.

**19.** The method according to any one of claims 12 to 18, wherein the receiving, by the network device, the uplink information in the first time domain unit in a second time domain unit after the first time domain unit comprises:
receiving, by the network device, the uplink information in the first time domain unit at the second time-frequency location corresponding to the second time domain unit after the first time domain unit.

**20.** The method according to any one of claims 12 to 19, wherein the first resource comprises a first frequency hopping resource and/or a second frequency hopping resource, the first frequency hopping resource is a preset resource for receiving first frequency hopping information in the first uplink information, and the second frequency hopping resource is a preset resource for receiving second frequency hopping information in the first uplink information.

**21.** The method according to any one of claims 12 to 20, wherein all frequency domain resources on the symbols for uplink transmission are for uplink transmission.

**22.** The method according to any one of claims 12 to 21, wherein the second time domain unit further comprises at least one first symbol, and some frequency domain resources on the at least one first symbol are for uplink transmission.

**23.** A communication apparatus, comprising:

a processing unit, configured to determine that a time domain unit in which a first resource is located comprises a first time domain unit, wherein a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer, wherein
the processing unit is further configured to perform one of the following operations:

the processing unit controls a transceiver unit to send the first uplink information in the first time domain unit in a second time domain unit after the first time domain unit, wherein a quantity of symbols for uplink transmission in the second time domain unit is less than n;

the processing unit controls a transceiver unit to send the first uplink information in the first time domain unit at a first time-frequency location corresponding to the first time domain unit, wherein the first time-frequency location is different from a second time-frequency location, and the second time-frequency location is a time-frequency location of the first resource in the first time domain unit in which the first resource is located; and

the processing unit skips sending the first uplink information in the first time domain unit.

24. The apparatus according to claim 23, wherein the first uplink information is uplink information other than a first piece of uplink information in the repeated uplink information.

25. The apparatus according to claim 24, wherein the transceiver unit is further configured to:
send second uplink information on a second resource, wherein the second uplink information is the first piece of uplink information in the repeatedly sent uplink information, and a time domain unit in which the second resource is located comprises the first time domain unit.

26. The apparatus according to claim 25, wherein the processing unit is further configured to perform one of the following operations:

controlling the transceiver unit to send first frequency hopping information and/or second frequency hopping information in third uplink information in a second time domain unit after a first time domain unit in which the second resource is located;

controlling the transceiver unit to send first frequency hopping information and/or second frequency hopping information in third uplink information in a first time domain unit after a first time domain unit in which the second resource is located; and

skipping sending third uplink information, wherein

the third uplink information is uplink information other than the first piece of uplink information in the repeated uplink information.

27. The apparatus according to claim 26, wherein the processing unit is specifically configured to:

separately determine whether a frequency domain location of the first frequency hopping information in the third uplink information and/or a frequency domain location of the second frequency hopping information in the third uplink information are/is located on an uplink transmission frequency domain resource in the second time domain unit; and

control the transceiver unit to send in the second time domain unit, frequency hopping information on the uplink transmission frequency domain resource in the second time domain unit.

28. The apparatus according to any one of claims 23 to 27, wherein the transceiver unit is further configured to:
receive a first parameter from a network device, wherein the first parameter indicates the first time-frequency location.

29. The apparatus according to claim 28, wherein the first parameter comprises frequency domain offset information or frequency domain resource information.

30. The apparatus according to any one of claims 23 to 29, wherein the processing unit is specifically configured to:
control the transceiver unit to send the uplink information in the first time domain unit at the second time-frequency location corresponding to the second time domain unit after the first time domain unit.

31. The apparatus according to any one of claims 23 to 30, wherein the first resource comprises a first frequency hopping resource and/or a second frequency hopping resource, the first frequency hopping resource is a preset resource for sending first frequency hopping information in the first uplink information, and the second frequency hopping resource is a preset resource for sending second frequency hopping information in the first uplink information.

32. The apparatus according to any one of claims 23 to 31, wherein all frequency domain resources on the symbols for uplink transmission are for uplink transmission.

33. The apparatus according to any one of claims 23 to 32, wherein the second time domain unit further comprises at least one first symbol, and some frequency domain resources on the at least one first symbol are for uplink transmission.

34. A communication apparatus, comprising:

a processing unit, configured to determine that a time domain unit in which a first resource is located comprises a first time domain unit, wherein a quantity of symbols for uplink transmission in the first time domain unit is greater than or equal to n, the first resource is a preset resource for receiving first uplink information, the first uplink information is one piece of uplink information in repeatedly sent uplink information, n≥1, and n is an integer, wherein
the processing unit is further configured to perform one of the following operations:

the processing unit controls a transceiver unit to receive the first uplink information in the first time domain unit in a second time domain unit after the first time domain unit, wherein a quantity of symbols for uplink transmission in the second time domain unit is less than n;
the processing unit controls a transceiver unit to receive the first uplink information in the first time domain unit at a first time-frequency location corresponding to the first time domain unit, wherein the first time-frequency location is different from a second time-frequency location, and the second time-frequency location is a time-frequency location of the first resource in the first time domain unit in which the first resource is located; and
the processing unit skips receiving the first uplink information in the first time domain unit.

35. The apparatus according to claim 34, wherein the first uplink information is uplink information other than a first piece of uplink information in the repeated uplink information.

36. The apparatus according to claim 35, wherein the transceiver unit is further configured to:
receive second uplink information on a second resource, wherein the second uplink information is the first piece of uplink information in the repeatedly sent uplink information, and a time domain unit in which the second resource is located comprises the first time domain unit.

37. The apparatus according to claim 36, wherein the processing unit is further configured to perform one of the following operations:

controlling the transceiver unit to receive first frequency hopping information and/or second frequency hopping information in third uplink information in a second time domain unit after a first time domain unit in which the second resource is located;
controlling the transceiver unit to receive first frequency hopping information and/or second frequency hopping information in third uplink information in a first time domain unit after a first time domain unit in which the second resource is located; and
skipping receiving third uplink information, wherein
the third uplink information is uplink information other than the first piece of uplink information in the repeated uplink information.

38. The apparatus according to claim 37, wherein the processing unit is specifically configured to:

separately determine whether a frequency domain location of the first frequency hopping information in the third uplink information and/or a frequency domain location of the second frequency hopping information in the third uplink information are/is located on an uplink transmission frequency domain resource in the second time domain unit; and
control the transceiver unit to receive in the second time domain unit, frequency hopping information on the uplink transmission frequency domain resource in the second time domain unit.

39. The apparatus according to any one of claims 34 to 38, wherein the transceiver unit is further configured to:
send a first parameter to a terminal device, wherein the first parameter indicates the first time-frequency location.

40. The apparatus according to claim 39, wherein the first parameter comprises frequency domain offset information or frequency domain resource information.

41. The apparatus according to any one of claims 34 to 40, wherein the transceiver unit is specifically configured to:

receive the uplink information in the first time domain unit at the second time-frequency location corresponding to the second time domain unit after the first time domain unit.

42. The apparatus according to any one of claims 34 to 41, wherein the first resource comprises a first frequency hopping resource and/or a second frequency hopping resource, the first frequency hopping resource is a preset resource for receiving first frequency hopping information in the first uplink information, and the second frequency hopping resource is a preset resource for receiving second frequency hopping information in the first uplink information.

43. The apparatus according to any one of claims 34 to 42, wherein all frequency domain resources on the symbols for uplink transmission are for uplink transmission.

44. The apparatus according to any one of claims 34 to 43, wherein the second time domain unit further comprises at least one first symbol, and some frequency domain resources on the at least one first symbol are for uplink transmission.

45. A communication device, comprising a processor and a memory, wherein the memory is configured to store a computer program, and the processor is configured to invoke the computer program stored in the memory and run the computer program, to perform the method according to any one of claims 1 to 22.

46. A chip, comprising a processor, configured to invoke computer instructions from a memory and run the computer instructions, so that a device in which the chip is installed performs the method according to any one of claims 1 to 22.

47. A computer-readable storage medium, configured to store computer program instructions, wherein the computer program enables a computer to perform the method according to any one of claims 1 to 22.

48. A computer program product, comprising computer program instructions, wherein the computer program instructions enable a computer to perform the method according to any one of claims 1 to 22.

FIG. 1

FIG. 2a

Downlink transmission resource

Uplink transmission resource

Flexible transmission resource

Slot  0   1   2   3   4

## FIG. 2b

Downlink transmission resource

Flexible transmission resource

Uplink transmission resource

Resource occupied by uplink information

Slot  0   1   2   3   4

## FIG. 2c

BWP

| VRB | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| RBG 0 ← | | RBG 1 | | | | RBG 2 | | | | RBG 3 | | | | RBG 4 | | | | RBG 4 | | | | RBG 5 | |
| 0 | | 0 | | | | 0 | | | | 1 | | | | 1 | | | | 0 | | | | 0 | |

FIG. 3a

| VRB | RBG | |
|---|---|---|
| 39 | RBG 10 | 0 |
| 38 | | |
| 37 | | |
| 36 | RBG 9 | 1 |
| 35 | | |
| 34 | | |
| 33 | | |
| 32 | RBG 8 | 1 |
| 31 | | |
| 30 | | |
| 29 | | |
| 28 | RBG 7 | 0 |
| 27 | | |
| 26 | | |
| 25 | | |
| 24 | RBG 6 | 1 |
| 23 | | |
| 22 | | |
| 21 | | |
| 20 | RBG 5 | 1 |
| 19 | | |
| 18 | | |
| 17 | | |
| 16 | RBG 4 | 1 |
| 15 | | |
| 14 | | |
| 13 | | |
| 12 | RBG 3 | 0 |
| 11 | | |
| 10 | | |
| 9 | | |
| 8 | RBG 2 | 1 |
| 7 | | |
| 6 | | |
| 5 | | |
| 4 | RBG 1 | 1 |
| 3 | | |
| 2 | | |
| 1 | | |
| 0 | RBG 0 | **1** |

BWP

$N_{RB\_alloc}$

$N_{RB\_gap}$

$N_{RB\_alloc}$

$N_{RB\_gap}$

$N_{RB\_alloc}$

FIG. 3b

BWP

VRB | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22

$L_{RB}$

$RB_{Start}$

FIG. 3c

Downlink transmission resource

Uplink transmission resource

Flexible transmission resource

Resource occupied by uplink information

BWP

Slot 0 1 2 3 4 5 6 7 8 9 ...

FIG. 4a

Downlink transmission resource

Uplink transmission resource

Flexible transmission resource

Resource occupied by uplink information

BWP

Slot 0 1 2 3 4 5 6 7 8 9 ...

FIG. 4b

FIG. 4c

FIG. 5a

☐ Downlink transmission resource

▨ Uplink transmission resource

■ Resource occupied by uplink information

BWP {

Slot  0   1   2   3   4   5   6   7

...

FIG. 5b

☐ Downlink transmission resource

▨ Uplink transmission resource

■ Resource occupied by uplink information

BWP {

Slot  0   1   2   3   4   5   6   7

...

FIG. 5c

10

| Terminal device | | Network device |

S210: The terminal device determines that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer

S220: The terminal device sends the first uplink information in the first time domain unit in a second time domain unit after the first time domain unit, where a quantity of symbols for uplink transmission in the second time domain unit is less than n

S310: The network device receives the first uplink information in the first time domain unit in the second time domain unit after the first time domain unit

FIG. 6

20

| Terminal device | | Network device |

S210: The terminal device determines that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, n≥1, and n is an integer

S230: The terminal device sends the first uplink information in the first time domain unit at a first time-frequency location corresponding to the first time domain unit, where the first time-frequency location is different from a second time-frequency location, and the second time-frequency location is a time-frequency location of the first resource in the first time domain unit in which the first resource is located

S310: The network device receives the first uplink information in the first time domain unit in a second time domain unit after the first time domain unit

FIG. 7

30

| Terminal device | | Network device |

S210: The terminal device determines that a time domain unit in which a first resource is located includes a first time domain unit, where a quantity of symbols for uplink transmission in the first time domain unit is greater than or equal to n, the first resource is a preset resource for sending first uplink information, the first uplink information is one piece of uplink information in repeatedly sent uplink information, $n \geq 1$, and n is an integer

S230: The terminal device skips sending the first uplink information in the first time domain unit

S310: The network device receives the first uplink information in the first time domain unit in a second time domain unit after the first time domain unit

FIG. 8

▨ Downlink transmission resource    ▢ Flexible transmission resource

▨ Uplink transmission resource    ▨ Resource occupied by uplink information

BWP {

Slot    0    1    2    3    4    5    6    7    8    9

FIG. 9a

Downlink transmission resource

Flexible transmission resource

Uplink transmission resource

Resource occupied by uplink information

BWP

Slot 0 1 2 3 4 5 6 7 8 9

FIG. 9b

Downlink transmission resource

Flexible transmission resource

Uplink transmission resource

Resource occupied by uplink information

BWP

Slot 0 1 2 3 4 5 6 7 8 9

FIG. 9c

⬚ Downlink transmission resource

▨ Uplink transmission resource

▪ Resource occupied by uplink information

FIG. 10a

⬚ Downlink transmission resource

▨ Uplink transmission resource

▪ Resource occupied by uplink information

FIG. 10b

Downlink transmission resource

Uplink transmission resource

Resource occupied by uplink information

Slot 0 1 2 3 4 5 6 7

FIG. 10c

Downlink transmission resource

Uplink transmission resource

Resource occupied by uplink information

Slot 0 1 2 3 4 5 6 7

FIG. 10d

FIG. 11a

FIG. 11b

FIG. 11c

FIG. 12a

Downlink transmission resource

Uplink transmission resource

Resource occupied by uplink information

BWP

Slot 0 1 2 3 4 5 6 7

...

FIG. 12b

Downlink transmission resource

Uplink transmission resource

Resource occupied by uplink information

BWP

Slot 0 1 2 3 4 5 6 7

...

FIG. 12c

Legend:
- Downlink transmission resource
- Flexible transmission resource
- Uplink transmission resource
- Resource occupied by uplink information

BWP

Slot 0 1 2 3 4 5 6 7 8 9 ...

FIG. 13

Legend:
- Downlink transmission resource
- Uplink transmission resource
- Flexible transmission resource
- First frequency hopping resource
- Second frequency hopping resource

BWP

Slot 0 1 2 3 4 5 6 7 8 9 ...

FIG. 14a

Downlink transmission resource
Uplink transmission resource
Flexible transmission resource
First frequency hopping resource
Second frequency hopping resource

BWP

Slot 0 1 2 3 4 5 6 7 8 9

...

FIG. 14b

Downlink transmission resource
Uplink transmission resource
Flexible transmission resource
First frequency hopping resource
Second frequency hopping resource

BWP

Slot 0 1 2 3 4 5 6 7 8 9

...

FIG. 14c

Downlink
transmission resource

Uplink transmission
resource

Flexible transmission
resource

First frequency
hopping resource

Second frequency
hopping resource

BWP

Slot  0   1   2   3   4   5   6   7   8   9

FIG. 15

Downlink transmission
resource

Flexible transmission
resource

Uplink transmission
resource

SRS transmission
resource

BWP

Slot  0   1   2   3   4   5   6   7   8   9

FIG. 16

Communication apparatus 400

Processing unit 410

Transceiver unit 420

FIG. 17

500

Processor
510

Memory
530

Transceiver
520

FIG. 18

FIG. 19

**EP 4 395 438 A1**

<table>
<tr><td colspan="2">INTERNATIONAL SEARCH REPORT</td><td colspan="2">International application No.<br>**PCT/CN2022/111620**</td></tr>
</table>

**A. CLASSIFICATION OF SUBJECT MATTER**

H04W 72/04(2009.01)i; H04W 72/12(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; VEN; CNKI; 3GPP: 互补时分复用, 全双工, 上行信息, 物理上行共享信道, 物理上行控制信道, 时域, 符号, 时隙, 子帧, 跳频, C-TDD, full duplex, PUSCH, PUCCH, time domain, slot, symbol

**C. DOCUMENTS CONSIDERED TO BE RELEVANT**

| Category* | Citation of document, with indication, where appropriate, of the relevant passages | Relevant to claim No. |
|---|---|---|
| X | ZTE et al. ""Discussion on IIoT and URLLC enhancements for 5G Advanced""<br>*3GPP TSG RAN Meeting #93-e Electronic Meeting, RP-212388,*<br>Vol. , No. , 06 September 2021 (2021-09-06),<br>ISSN: ,<br>full text, sections 1 and 2 | 1, 6-12, 17-23, 28-34, 39-48 |
| X | WO 2021062813 A1 (GUANGDONG OPPO MOBILE COMMUNICATIONS CO., LTD.) 08 April 2021 (2021-04-08)<br>description, page 7, line 25-page 16, line 15 | 1, 6-12, 17-23, 28-34, 39-48 |
| A | US 2020267756 A1 (QUALCOMM INC.) 20 August 2020 (2020-08-20)<br>entire document | 1-48 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 September 2022** | **29 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**58**

**INTERNATIONAL SEARCH REPORT**
**Information on patent family members**

International application No.
**PCT/CN2022/111620**

| Patent document cited in search report | Publication date (day/month/year) | Patent family member(s) | Publication date (day/month/year) |
|---|---|---|---|
| WO 2021062813 A1 | 08 April 2021 | CN 113711517 A | 26 November 2021 |
| US 2020267756 A1 | 20 August 2020 | TW 202041075 A | 01 November 2020 |
| | | WO 2020168259 A2 | 20 August 2020 |
| | | CN 113412662 A | 17 September 2021 |
| | | KR 20210128393 A | 26 October 2021 |
| | | EP 3925152 A2 | 22 December 2021 |
| | | SG 11202107920 A1 | 30 August 2021 |

Form PCT/ISA/210 (patent family annex) (January 2015)

## REFERENCES CITED IN THE DESCRIPTION

**Patent documents cited in the description**

- CN 202111063351